# EUROPEAN PATENT APPLICATION

(11) **EP 4 582 459 A1**
(43) Date of publication of application: **09.07.2025**
(21) Application number: 23860347.6
(22) Date of filing: 29.08.2023
(51) Int. Cl.: C08B 15/00, C08K 5/544, C08L 1/00, C08L 21/00, C08L 63/00

(54) **RUBBER-BONDED CELLULOSE FIBERS AND MANUFACTURING METHOD THEREFOR, RESIN COMPOSITION AND MANUFACTURING METHOD THEREFOR, AND CURABLE RESIN COMPOSITION**

(30) Priority: 31.08.2022 JP 2022138436
(71) Applicant: Kureha Corporation, Chuo-ku Tokyo 103-8552 (JP); Resinous Kasei Co., Ltd., Tokyo 103-0012 (JP); Kureha Trading Co., Ltd., Tokyo 103-0012 (JP)
(72) Inventor: KUDO, Takahiro, Tokyo 103-8552 (JP); SATO, Takeshi, Tokyo 103-8552 (JP); ARAI, Keizo, Tokyo 103-0012 (JP); ITO, Masaki, Tokyo 103-0012 (JP)
(74) Representative: Zimmermann & Partner Patentanwälte mbB
(86) International application number: PCT/JP2023/031233
(87) International publication number: WO 2024/048585

(57) **Abstract**

An object of the present invention is to provide rubber-bonded cellulose fibers that are less likely to cause an increase in viscosity or melt viscosity when added to various resins. Rubber-bonded cellulose fibers that solve the above problem contain cellulose fibers; a plurality of rubber particles disposed on surfaces of the cellulose fibers and having an average particle size of 300 nm or less; and a silane compound that bonds the cellulose fibers and the rubber particles.

## Description

### TECHNICAL FIELD

The present invention relates to rubber-bonded cellulose fibers and a manufacturing method therefor, a resin composition and a manufacturing method therefor, and a cured resin composition.

### BACKGROUND ART

Composite materials containing a resin, a reinforcing material, and the like are lightweight and have high strength, and thus are widely used in various industrial fields. In recent years, attempts have been made to replace known materials with biomass-derived materials and to reduce global greenhouse gas emissions.

Cellulose fibers are known as one of the biomass-derived materials. Combination of an epoxy resin and cellulose fibers provides a lightweight and high-strength composite material. However, the composite material may be brittle, and thus studies have been conducted on addition of particles having elasticity (e.g., rubber particles) (e.g., Patent Document 1).

### CITATION LIST

### PATENT DOCUMENT

Patent Document 1: JP 2015-48375 A

### SUMMARY OF INVENTION

### TECHNICAL PROBLEM

However, a resin composition containing an epoxy compound and cellulose fibers, or a resin composition containing an epoxy compound, cellulose fibers, and rubber particles has a problem that the composition has high viscosity and is difficult to form a composite material. Conceivable reasons for this are as follows.

In the resin composition containing an epoxy compound and cellulose fibers, the cellulose fibers are likely to interact with one another. The cellulose fibers form a network by hydrogen bonding or are physically entangled with one another, thereby increasing the viscosity of the composition. Meanwhile, in the resin composition containing an epoxy compound, cellulose fibers, and rubber particles, the interaction between the cellulose fibers is suppressed by the rubber particles entering between the cellulose fibers. However, in this composition, the viscosity increases due to friction between the rubber particles liberated in the system. Therefore, it is very difficult to reduce the viscosity of the resin composition containing an epoxy compound and cellulose fibers.

In recent years, studies have been conducted on addition of cellulose fibers to a resin other than epoxy resin for increasing its strength or the like. However, when an attempt is made to uniformly mix the resin and the cellulose fibers by melt-kneading or the like, a problem arises in that the cellulose fibers are hydrogen-bonded to one another or physically entangled with one another, and thus the melt viscosity tends to increase.

The present invention has been made in view of the above circumstances, and an object of the present invention is to provide a resin composition containing an epoxy compound and cellulose fibers and having a low viscosity, a method for manufacturing the resin composition, and a cured resin composition which is a cured product of the resin composition. Another object of the present invention is to provide rubber-bonded cellulose fibers that are less likely to cause an increase in viscosity or melt viscosity when added to various resins, a method for manufacturing the rubber-bonded cellulose fibers, and a resin composition containing the rubber-bonded cellulose fibers.

### SOLUTION TO PROBLEM

The present invention provides rubber-bonded cellulose fibers containing cellulose fibers; a plurality of rubber particles disposed on surfaces of the cellulose fibers and having an average particle size of 300 nm or less; and a silane compound that bonds the cellulose fibers and the rubber particles.

The present invention also provides a resin composition containing a resin, and a fibrous complex derived from the rubber-bonded cellulose fibers described above.

The present invention also provides a resin composition containing an alicyclic epoxy compound; cellulose fibers; rubber particles having carboxy group-containing surfaces and having an average particle size of 300 nm or less; and a silane compound containing an amino group.

The present invention also provides a cured resin composition produced by curing the alicyclic epoxy compound of the resin composition described above with a bifunctional active hydrogen compound.

The present invention also provides a method for manufacturing a resin composition, the method including mixing an alicyclic epoxy compound, rubber particles having carboxy group-containing surfaces and having an average particle size of 300 nm or less, and a silane compound containing an amino group; and further mixing cellulose fibers.

The present invention also provides a method for manufacturing rubber-bonded cellulose fibers, the method including mixing a dispersion medium, rubber particles having carboxy group-containing surfaces and having an average particle size of 300 nm or less, a silane compound containing an amino group, and cellulose fibers to prepare a liquid mixture; and removing the dispersion medium from the liquid mixture.

### ADVANTAGEOUS EFFECTS OF INVENTION

The resin composition of the present invention containing an alicyclic epoxy compound has a relatively low viscosity although it contains an epoxy compound and cellulose fibers. Therefore, the resin composition is easily handled and easily applied to various composite materials. Further, a cured resin composition produced by curing the resin composition with a bifunctional active hydrogen compound exhibits thermoplasticity. Therefore, the cured resin composition can be used alone or in combination with any thermoplastic resin for various applications.

Furthermore, the rubber-bonded cellulose fibers of the present invention are easy to manufacture. Further, when the rubber-bonded cellulose fibers are mixed with any resin or melt-kneaded, the viscosity or the melt viscosity is less likely to increase. Therefore, the resin composition is easily handled and easily applied to various composite materials.

### BRIEF DESCRIPTION OF THE DRAWINGS

FIG. 1 is a photograph of cured resin compositions produced in Examples 1 and 12 before a test for determining the presence or absence of thermoplasticity.
FIG. 2 is a photograph of the cured resin compositions produced in Examples 1 and 12 after the test for determining the presence or absence of thermoplasticity.
FIG. 3 shows photographs of the cured resin composition produced in Example 1 as observed with a scanning electron microscope.
FIG. 4 is a photograph of a second resin composition prepared in Example a as observed with a scanning electron microscope.
FIG. 5 shows photographs of cellulose fibers alone used in Example b and rubber-bonded cellulose fibers produced from the cellulose fibers (Example b).

### DESCRIPTION OF EMBODIMENTS

Next will be described a first resin composition containing an alicyclic epoxy resin and cellulose fibers, a preparation method for the first resin composition, and a cured resin composition produced from the first resin composition. Then will be described rubber-bonded cellulose fibers in which rubber particles are bonded to surfaces of cellulose fibers, and a second resin composition containing a fibrous complex derived from the rubber-bonded cellulose fibers.

### 1. First Resin Composition

A first resin composition according to an embodiment of the present invention contains an alicyclic epoxy compound; cellulose fibers; rubber particles having carboxy group-containing surfaces and having an average particle size of 300 nm or less; and a silane compound containing an amino group. In the first resin composition according to an embodiment of the present application, the amino group of the silane compound reacts with the carboxy group of a rubber particle, and the rubber particles and the silane compound are bonded to each other. Meanwhile, an Si group of the silane compound is bonded to an OH group of a cellulose fiber to form a siloxane bond, or an OH group of the silane compound and the OH group of the cellulose fiber are hydrogen-bonded, and the silane compound and the cellulose fiber are also bonded to each other. That is, the cellulose fibers and the rubber particles are bonded via the silane compound. In the first resin composition, the cellulose fibers are less likely to interact with one another, and the rubber particles are less likely to be liberated. Therefore, the viscosity of the first resin composition falls within a desired range although the first resin composition contains the cellulose fibers and the rubber particles. The description "containing an alicyclic epoxy compound, cellulose fibers, rubber particles, and a silane compound" in the present specification encompasses not only a state in which these components are individually contained, but also a state in which the cellulose fibers, the rubber particles, and the silane compound are compounded by the reaction described above.

In general, when a common epoxy compound is mixed with a compound containing an amino group, the epoxy compound and the amino group react with each other, and thickening is likely to occur. However, the epoxy compound used in the first resin composition according to an embodiment of the present invention is an alicyclic epoxy compound which hardly reacts with an amino group. Therefore, the viscosity of the first resin composition can be kept within the desired range. The respective components of the first resin composition according to an embodiment of the present invention will be described below.

### •Alicyclic Epoxy Compound

The alicyclic epoxy compound is a resin having, in its molecular structure, an alicyclic structure and an epoxy group (also referred to as "alicyclic epoxy group" in the present specification) that is adjacent to the alicyclic structure and is composed of two carbon atoms and an oxygen atom. The alicyclic epoxy compound may contain at least one alicyclic epoxy group, but preferably contains two or more alicyclic epoxy groups, from the viewpoint of curing the first resin composition for use. As described below, when the first resin composition (alicyclic epoxy compound) is cured with a curing agent such as an acid anhydride to produce a thermosetting cured resin composition, the alicyclic epoxy compound may have two or more alicyclic epoxy groups, or may have three or more alicyclic epoxy groups. Meanwhile, when the first resin composition (alicyclic epoxy compound) is cured with a bifunctional active hydrogen compound to produce a thermoplastic cured resin composition, the alicyclic epoxy compound preferably has only two alicyclic epoxy groups. The first resin composition may contain only one alicyclic epoxy compound or two or more alicyclic epoxy compounds.

Examples of the alicyclic epoxy group include a cyclohexene oxide group and a cyclopentene oxide group. Examples of the compound containing an alicyclic epoxy group include compounds represented by Formula (i) below.

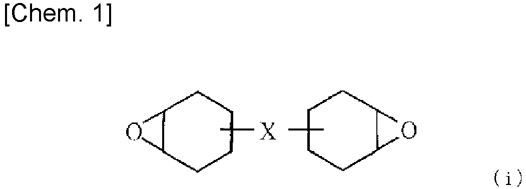

In Formula (i), X represents a single bond or a linking group. Examples of the linking group include a divalent hydrocarbon group, a carbonyl group, an ether bond, an ester bond, a siloxane bond, a carbonate group, an amide group, and a group formed by linking a plurality of these groups. A substituent (e.g., an alkyl group) may be bonded to a cyclohexene oxide group in Formula (i).

Examples of the divalent hydrocarbon group include a linear or branched alkylene group having from 1 to 18 carbons and a divalent alicyclic hydrocarbon group. Examples of the linear or branched alkylene group having from 1 to 18 carbons include a methylene group, a methylmethylene group, a dimethylmethylene group, an ethylene group, a propylene group, and a trimethylene group.

Examples of the divalent alicyclic hydrocarbon group include cycloalkylene groups (including a cycloalkylidene group), such as a 1,2-cyclopentylene group, a 1,3-cyclopentylene group, a cyclopentylidene group, a 1,2-cyclohexylene group, a 1,3-cyclohexylene group, a 1,4-cyclohexylene group, and a cyclohexylidene group.

Examples of the compound represented by Formula (i) include (3,4,3',4'-diepoxy)bicyclohexyl, bis(3,4-epoxycyclohexylmethyl) ether, 2,2-bis(3,4-epoxycyclohexan-1-yl)propane, 1,2-bis(3,4-epoxycyclohexan-1-yl)ethane, and compounds represented by Formulae (i-1) to (i-9) below. In Formulae (i-5) and (i-7) below, l and m each represent an integer of from 1 to 30. R' in Formula (i-5) below is an alkylene group having from 1 to 8 carbons. Among them, preferred is a linear or branched alkylene group having from 1 to 3 carbons, such as a methylene group, an ethylene group, a propylene group, or an isopropylene group.

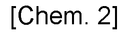

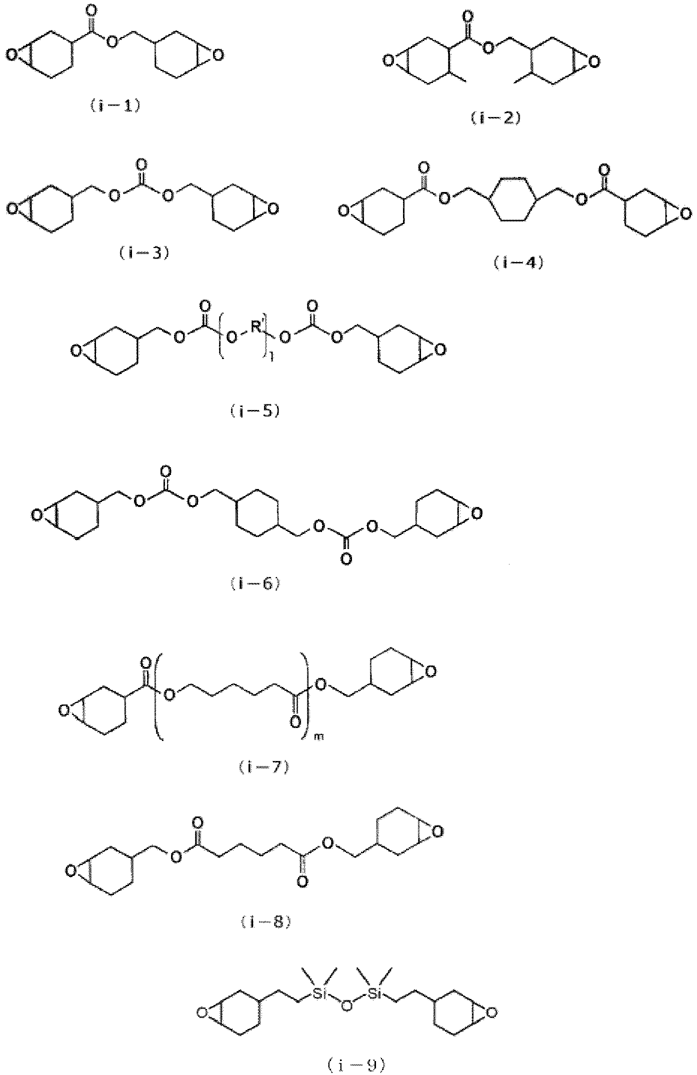

Examples of the alicyclic epoxy compound include a compound as shown below in addition to the compound represented by Formula (i) above.

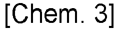

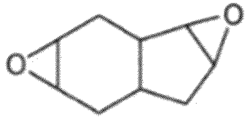

The epoxy equivalent of the alicyclic epoxy compound is not particularly limited, but is preferably from 70 to 200 g/eq, and more preferably from 80 to 140 g/eq when, for example, the first resin composition is cured with an active hydrogen compound described below. The epoxy equivalent can be measured in accordance with JIS K7236.

The amount of the alicyclic epoxy compound in the first resin composition is appropriately determined depending on the application, and is preferably 1 mass% or more and 95 mass% or less, and more preferably 70 mass% or more and 90 mass% or less of the first resin composition (the nonvolatile components of the first resin composition when the first resin composition contains a volatile component). When the amount of the alicyclic epoxy compound is 1 mass% or more, the first resin composition is easily used in various applications. Meanwhile, when the amount of the alicyclic epoxy compound is 95 mass% or less, the amounts of the cellulose fibers, the rubber particles, and the like are relatively sufficient, and the strength, toughness, and the like of a cured product of the first resin composition are likely to be favorable.

### •Cellulose Fibers

The cellulose fibers used in the present invention only need to be a cellulose-containing fibrous material, and may partially contain a component other than cellulose, such as hemicellulose or lignin.

The raw material of the cellulose fibers is not particularly limited, and examples of the raw material include pulp obtained from wood, bamboo, hemp, jute, kenaf, cotton, beet, agricultural residual waste, and fabric; and recycled materials such as rayon and cellophane. The pulp may be chemical pulp obtained by chemically or mechanically treating a plant raw material. Specifically, the pulp may be, for example, any of pulps, such as sulfite pulp, semi-chemical pulp, chemiground pulp, chemi-mechanical pulp, groundwood pulp, refiner mechanical pulp, thermomechanical pulp, chemi-thermomechanical pulp, deinked wastepaper pulp, cardboard wastepaper pulp, and magazine wastepaper pulp. The first resin composition may contain only one type of cellulose fibers or two or more types of cellulose fibers.

The average fiber diameter of the cellulose fibers is preferably 0.02 µm or more and 500 µm or less, more preferably 1 µm or more and 100 µm or less, and particularly preferably 5 µm or more and 60 µm or less. When the average fiber diameter of the cellulose fibers is 1 µm or more and 100 µm or less, the cellulose fibers are available at a lower cost and have good handleability. The average fiber length of the cellulose fibers that can be used in this step is preferably 0.1 µm or more and 10000 µm or less, preferably 10 µm or more and 5000 µm or less, and more preferably 100 µm or more and 300 µm or less. When the average fiber length of the cellulose fibers is 10 µm or more and 5000 µm or less, the cellulose fibers are available at a lower cost and have good handleability. When the average fiber diameter and average fiber length of the cellulose fibers are within the above ranges, the cellulose fibers are easily dispersed in the alicyclic epoxy compound. The average fiber diameter and fiber length are average values of measured fiber diameters and fiber lengths of 100 or more cellulose fibers when the fibers are observed with, for example, an optical microscope, an electron microscope, or an AFM, which is used depending on the diameter to be measured. In addition, when the ratio of the average fiber length to the average fiber diameter, i.e., so-called aspect ratio (average fiber length/average fiber diameter) is higher, fracture toughness is easily improved.

Measurement of the viscosity of a cellulose fiber dispersion is a method for evaluating the aspect ratio of cellulose fibers. A higher aspect ratio leads to an increase in contact between the cellulose fibers, resulting in high viscosity. The cellulose fibers are preferably cellulose fibers having an aspect ratio which provides a dispersion viscosity of 5 Pa·s or more and 300 Pa·s or less, and more preferably 10 Pa or more and 10 Pa·s or more and 100 Pa·s or less when the cellulose fibers are added to RKB-5810 (available from Resinous Corporation), i.e., a highly transparent rubber-modified epoxy resin, and concentration adjustment is performed with Celloxide 2021P (available from Daicel Corporation), i.e., an alicyclic epoxy resin to give a rubber particle concentration of 8 mass% and a cellulose fiber concentration of 8 mass%. The lower limit may be 50 Pa·s. When the cellulose fibers having an aspect ratio capable of satisfying the above viscosity range are used, the fracture toughness is easily improved, and good fluidity is achieved. Viscosity measurement conditions are the same as those used for the viscosity evaluation described below.

The amount of the cellulose fibers in the first resin composition is appropriately determined depending on the application, and is preferably 1 mass% or more and 10 mass% or less, more preferably 2 mass% or more and 8 mass% or less, and particularly preferably 4 mass% or more and 6 mass% or less of the first resin composition (the nonvolatile components of the first resin composition when the first resin composition contains a volatile component). When the amount of the cellulose fibers is 1 mass% or more, an effect due to addition of the cellulose fibers is easily exhibited, and, for example, the strength of the cured product of the first resin composition is increased. Meanwhile, when the amount of the cellulose fibers is 10 mass% or less, the viscosity of the first resin composition easily falls within a desired range.

### •Rubber Particles

The rubber particles only need to be particles that contain rubber, have carboxy group-containing surfaces, and have an average particle size of 300 nm or less. When the first resin composition contains rubber particles having such an average particle size, as described above, not only the interaction between the cellulose fibers can be suppressed, but also the toughness of the cured product of the first resin composition can be enhanced. The first resin composition may contain only one type of rubber particles or two or more types of rubber particles.

The rubber particles may be particles formed of a single composition, or may be core-shell type particles each including a core and a shell component covering a portion or the entirety of the core. The core-shell type particles can have, for example, a structure in which the core contains rubber and the shell contains a carboxy group-containing resin. The core-shell type particles are preferable from the viewpoint that desired physical properties are easily obtained by adjusting the amount of carboxy groups on the surfaces or by combining the core and the shell. Hereinafter, the rubber particles will be described by taking a case of core-shell type particles as an example, but are not limited to this embodiment.

Examples of the component constituting the core of the core-shell type particles include elastomers containing, as a main component, polybutadiene, polyisoprene, butadiene-acrylonitrile copolymer, styrenebutadiene copolymer, styrene-isoprene copolymer, ethylene-propylene copolymer, ethylene-α-olefin copolymer, ethylene-α-olefin-polyene copolymer, acrylic rubber, butadiene-(meth)acrylate copolymer, styrenebutadiene block copolymer, styrene-isoprene block copolymer, and polyorganosiloxane rubber polymers such as silicone and silicone-acryl. The core may contain only one type of these or two or more types of these.

Meanwhile, the component constituting the shell only needs to contain a carboxy group. For example, the component may be a resin containing a carboxy group. In addition, the component may be composed of, for example, a compound graft-polymerized with the component constituting the core. Specific examples of the component include carboxyl group-containing vinyl monomers such as acrylic acid, methacrylic acid, crotonic acid, maleic acid, itaconic acid, fumaric acid, isocrotonic acid, salicylic acid, vinyloxyacetic acid, allyloxyacetic acid, 2-(meth)acryloylpropanoic acid, 3-(meth)acryloylbutanoic acid, and 4-vinylbenzoic acid.

The amount of the carboxy groups present on the surfaces of the rubber particles is preferably from 0.1 to 10 mmol/g, and more preferably from 0.5 to 4 mmol/g. The amount of the carboxy groups can be measured by FT-IR before and after addition of an amino group-containing silane coupling agent. Specifically, the amino group-containing silane coupling agent (e.g., Z-6011) is gradually added to the first resin composition (e.g., RKB-5810) in which the carboxy group-containing core-shell rubber is sufficiently dispersed in the alicyclic epoxy resin, and the amount of the carboxy groups is calculated from the amount of the silane coupling agent at which a decrease in carboxy group-derived absorption peak (e.g., 1719 cm⁻¹) is stopped. When the amount of the carboxy groups is within this range, the carboxy groups easily react with an amino compound of the silane compound described below.

The average particle size of the rubber particles may be 300 nm or less, but is preferably 10 nm or more and 300 nm or less, more preferably 20 nm or more and 100 nm or less, and particularly preferably 20 nm or more and 60 nm or less. Still more preferably, the upper limit is 50 nm. When the average particle size of the rubber particles is excessively small, the rubber particles are difficult to disperse in the alicyclic epoxy compound. In addition, when the average particle size of the rubber particles is excessively small, the entire rubber particles are likely to be covered with the silane compound described below. When the rubber particles are covered with the silane compound, one rubber particle and a plurality of cellulose fibers are easily bonded via the silane compound. As a result, the cellulose fibers are difficult to move freely in the first resin composition, and the viscosity of the first resin composition may increase. In contrast, when the average particle size of the rubber particles is 10 nm or more, the entire rubber particles are less likely to be covered with the silane compound described below, and the viscosity of the first resin composition can be reduced. Meanwhile, when the average particle size of the rubber particles is 300 nm or less, a plurality of rubber particles are likely to be disposed around one cellulose fiber, and the viscosity of the first resin composition is likely to be reduced. The average particle size is measured in accordance with JIS Z8825. When there is a possibility that the rubber particles may be non-spherical or may aggregate, it is desirable to directly observe/measure the particle size with a transmission electron microscope or the like and to confirm the consistency with the measurement results described above.

The core-shell type rubber particles can be produced by a known method. For example, there can be employed a method in which the monomer components constituting the core and the shell are totally charged at one time and the monomer components are subjected to emulsion polymerization; a method in which some of the monomer components are polymerized to form the core and then the remainder is continuously or intermittently added to form the shell; or a method in which the monomer components are continuously added from the beginning of polymerization; or a method using seed particles. The rubber particles may be a commercially available product.

The rubber particles may be used after being dispersed in the above-described alicyclic epoxy compound in advance. For example, the rubber particles may be dispersed in an alicyclic epoxy compound or a polymer thereof by using a mixing and stirring device such as a hyper mixer or a homogenizer. Alternatively, the rubber particles may be prepared in an alicyclic epoxy compound and used as is.

The amount of the rubber particles in the first resin composition is appropriately determined depending on the application, and is preferably 2 mass% or more and 20 mass% or less, and more preferably 3 mass% or more and 5 mass% or less of the first resin composition (the nonvolatile components of the first resin composition when the first resin composition contains a volatile component). Depending on the application of the first resin composition, the amount of the rubber particles may be 7 mass% or more and 9 mass% or less. The amount (mass) of the rubber particles relative to the amount (mass) of the cellulose fibers is appropriately determined depending on the fiber diameter and fiber length of the cellulose fibers, and is preferably 0.1 times or more and 10 times or less, and more preferably 0.2 times or more and 3 times or less. When the amount of the rubber particles is 2 mass% or more of the first resin composition, the rubber particles are easily sufficiently attached to the peripheries of the cellulose fibers via the silane compound described below. Meanwhile, when the amount of the rubber particles is 20 mass% or less of the first resin composition, the rubber particles are unlikely to be liberated in the first resin composition, and the viscosity of the first resin composition is likely to fall within a desired range.

### •Silane Compound

The silane compound is a compound containing an amino group and silicon (Si), and only needs to be a compound capable of bonding the rubber particles and the cellulose fibers via the silane compound. Examples of the silane compound include an amino group-containing silane coupling agent (hereinafter also referred to as "aminosilane coupling agent").

Examples of the aminosilane coupling agent include 3-aminopropyltrimethoxysilane, 3-aminopropyltriethoxysilane, N-2-(aminoethyl)-3-aminopropylmethyldimethoxysilane, N-2-(aminoethyl)-3-aminopropyltrimethoxysilane, 3-triethoxysilyl-N-(1,3-dimethylbutylidene)propylamine, and N-phenyl-3-aminopropyltrimethoxysilane. The first resin composition may contain only one type of these or two or more types of these. Among these, 3-aminopropyltriethoxysilane is preferable from the viewpoint of easy availability and ease of keeping the distance between the cellulose fibers and the rubber particles within an appropriate range.

The amount (mass) of the silane compound in the first resin composition is appropriately determined depending on the application, and is preferably equal to or greater than 0.1 times and equal to or less than 0.5 times, more preferably equal to or greater than 0.2 times and equal to or less than 0.4 times, and still more preferably equal to or greater than 0.25 times and equal to or less than 0.35 times the amount (mass) of the rubber particles described above. As described above, preferably, the peripheries of the rubber particles are not completely covered with the silane compound. Therefore, the amount of the silane compound is preferably equal to or less than 0.5 times the amount of the rubber particles. Meanwhile, in order to dispose the rubber particles around the cellulose fibers, the amount of the silane compound is preferably equal to or greater than 0.1 times the amount of the rubber particles. In particular, when the ratio is equal to or greater than 0.25 times and equal to or less than 0.35 times, the resultant cured resin composition exhibits good toughness, and the viscosity of the first resin composition is reduced.

### •Others

Besides the above-described alicyclic epoxy compound, cellulose fibers, rubber particles, and silane compound, an additional component may be contained as long as the objects and effects of the present invention are not impaired. Examples of the additional component include a solvent, various additives, and a resin other than the alicyclic epoxy compound.

### •Viscosity of First Resin Composition

The viscosity of the first resin composition is appropriately determined depending on its application. The viscosity of the first resin composition not containing a curing agent, as measured by a cone-plate viscometer at 25°C and 5 rpm after the elapse of 30 seconds, is preferably 0.1 Pa·s or more and 300 Pa·s or less, and more preferably 0.5 Pa·s or more and 100 Pa·s or less. A viscosity of the first resin composition within the above range results in improved handling when the first resin composition is mixed with another composition or when only the first resin composition is cured to form a composite material.

### 2. Method for Preparing First Resin Composition

The method for preparing the first resin composition described above is not particularly limited, but the following method is preferable from the viewpoint of disposing the rubber particles around the cellulose fibers via the silane compound as described above.

Firstly, a step of mixing an alicyclic epoxy resin, rubber particles, and a silane compound is performed. The mixing method is not particularly limited, and, for example, stirring with a known stirrer or the like may be used. When these components are mixed, the carboxy groups of the rubber particles react with the amine of the silane compound to form a bonded state. Subsequently, a step of mixing of cellulose fibers with the composition is performed. The mixing method is not particularly limited, but kneading with a three-roll mill or the like is preferably performed, from the viewpoint of homogeneously dispersing the cellulose fibers in the first resin composition and bonding the rubber particles to the peripheries of the cellulose fibers via the silane compound. In general, after the kneading, warming is also performed in a step of defoaming bubbles generated during kneading. However, in the present invention, kneading is performed in a state in which the cellulose fibers are contained, and thus it is desirable to remove water produced by moisture absorption or reaction at the time of kneading. The defoaming after the kneading is preferably vacuum defoaming after warming or while warming.

### 3. Cured Resin Composition

In the present specification, a composition in a state where the first resin composition (alicyclic epoxy compound) described above is cured with a curing agent is referred to as "cured resin composition", and a composition in a state where the first resin composition described above and the curing agent are contained, that is, a composition in an uncured state is referred to as "curing agent-containing resin composition".

The first resin composition described above is mixed with any curing agent, and the above-described alicyclic epoxy compound or the like is subjected to reaction, to produce a cured resin composition. The curing agent to be used can be a compound known as a curing agent for an epoxy resin. The reaction of the alicyclic epoxy compound is roughly classified into the following three reactions:
(i) copolycondensation reaction between an epoxy group and an acid anhydride group;
(ii) self-polymerization of an epoxy group with a basic catalyst or an acidic catalyst; and
(iii) addition reaction between an epoxy group and an active hydrogen compound. The respective reactions will be described below.

### (i) Copolycondensation Reaction between Epoxy Group and Acid Anhydride Group

Examples of the acid anhydride used for the polycondensation reaction between an epoxy group and an acid anhydride group include phthalic anhydride, methyltetrahydrophthalic anhydride, methylhexahydrophthalic anhydride, hexahydrophthalic anhydride, tetrahydrophthalic anhydride, trialkyltetrahydrophthalic anhydride, methylhimic anhydride, methylcyclohexenedicarboxylic anhydride, trimellitic anhydride, pyromellitic anhydride, benzophenonetetracarboxylic anhydride, ethylene glycol bistrimellitate, glycerol tristrimellitate, dodecenylsuccinic anhydride, polyazelaic anhydride, and poly(ethyloctadecanedioic) anhydride.

Regarding the amount of the curing agent used for the reaction described above, the acid anhydride equivalent or the OH equivalent is desirably made equal to the epoxy group equivalent of the first resin composition. However, when an acid anhydride is used as the curing agent, the optimum equivalent ratio is known to vary depending on the type of acid anhydride and the desired physical properties (thermal deformation temperature, weight reduction rate, dielectric constant, and PCT moisture absorption rate), and it is preferable to refer to the value recommended by the manufacturer. For example, the amount of the acid anhydride is preferably 50 parts by mass or more and 400 parts by mass or less, and more preferably 70 parts by mass or more and 200 parts by mass or less, relative to 100 parts by mass of the amount of the epoxy group-containing compound in the first resin composition.

A catalyst may be used for the above reaction. Examples of the catalyst include urea compounds such as 3-(3,4-dichlorophenyl)-1,1-dimethylurea; imidazole compounds such as 2-methylimidazole and 2-ethyl-4-methylimidazole; adducts of an imidazole compound and an epoxy resin; organophosphorus compounds such as triphenylphosphine; borates such as tetraphenylphosphine tetraphenylborate; diazabicycloundecene; and phosphonium salts such as tetraalkylphosphonium salts, tetraphenylphosphonium salts, and alkyltriphenylphosphonium salts.

The amount of the catalyst to be used is preferably 0.1 parts by mass or more and 10 parts by mass or less, and more preferably 0.5 parts by mass or more and 5 parts by mass or less, relative to 100 parts by mass of the amount of the epoxy group-containing compound (e.g., alicyclic epoxy compound) in the first resin composition described above.

### (ii) Self-polymerization of Epoxy Group with Basic Catalyst or Acidic Catalyst

The basic catalyst or the acidic catalyst may be any catalyst as long as it enables self-polymerization of the epoxy group-containing compound (e.g., alicyclic epoxy compound) in the first resin composition described above. Examples of the catalyst include cationic curing catalysts. Examples of the cationic curing catalyst include a cationic photopolymerization initiator and a cationic thermal polymerization initiator. One type of these cationic curing catalysts may be used alone, or two or more thereof may be used in combination.

Examples of the cationic photopolymerization initiator include sulfonium salts such as triarylsulfonium hexafluorophosphate and triarylsulfonium hexafluoroantimonate; iodonium salts such as diaryliodonium hexafluorophosphate, diphenyliodonium hexafluoroantimonate, bis(dodecylphenyl)iodonium tetrakis(pentafluorophenyl)borate, and iodonium[4-(4-methylphenyl-2-methylpropyl)phenyl] hexafluorophosphate; phosphonium salts such as tetrafluorophosphonium hexafluorophosphate; and pyridium salts.

Examples of the cationic thermal polymerization initiator include aryldiazonium salts, aryliodonium salts, arylsulfonium salts, and allene-ion complexes. It is also possible to use a compound between a chelate compound of a metal such as aluminum or titanium with acetoacetic acid or a diketone and a silanol such as triphenylsilanol; or a compound between a chelate compound of a metal such as aluminum or titanium with acetoacetic acid or a diketone and a phenol such as bisphenol S.

The amount of the cationic curing catalyst to be used is not particularly limited, but is preferably from 0.01 to 30 parts by mass, and more preferably about from 0.05 to 10 parts by weight, relative to 100 parts by mass of the total amount of the epoxy group-containing compounds in the first resin composition described above.

When the cationic photopolymerization initiator is used, a photosensitizer may be used in combination. The photosensitizer further enhances the action of the cationic photopolymerization initiator and further promotes the cationic photopolymerization of the above-described alicyclic epoxy compound or the like. Such a photosensitizer is not particularly limited. Examples of the usable photosensitizer include a carbonyl compound, an organic sulfur compound, a persulfide, a redox compound, an azo compound, a diazo compound, a halogen compound, and a photoreducible dye. Specific examples of the photosensitizer include benzoin derivatives such as benzoin methyl ether and benzoin isopropyl ether; benzophenone derivatives such as benzophenone, 2,4-dichlorobenzophenone, methyl o-benzoylbenzoate, and 4,4'-bis(dimethylamino)benzophenone; thioxanthone derivatives such as 2-chlorothioxanthone and 2-isopropylthioxanthone; anthraquinone derivatives such as 2-chloroanthraquinone and 2-methylanthraquinone; and anthracene derivatives such as dipropoxyanthracene and dibutoxyanthracene. One type of these photosensitizers may be used alone, or two or more types thereof may be used in combination.

### (iii) Addition Reaction between Epoxy Group and Active Hydrogen Compound

When the epoxy group-containing compound (e.g., alicyclic epoxy compound) in the first resin composition described above is subjected to an addition reaction with an active hydrogen compound, 1) the active hydrogen compound to be used may be an active hydrogen compound (B1) having a pKa of 10 or less. Alternatively, 2) the active hydrogen compound to be used may be an active hydrogen compound (B2) having a pKa of more than 10, and a cationic catalyst (C1) may be used in combination, to cause the addition reaction between the epoxy group-containing compound and the active hydrogen compound. Alternatively, 3) the active hydrogen compound to be used may be an active hydrogen compound (B2) having a pKa of more than 10, and a catalyst (C2) that produces cations through a reaction or light irradiation may be used in combination, to cause the addition reaction between the epoxy group-containing compound and the active hydrogen compound.

### Case 1)

When the active hydrogen compound (B1) having a pKa of 10 or less is used as the active hydrogen compound, the pKa of the active hydrogen compound (B1) only needs to be 10 or less, but is preferably from 6 to 10. Since an active hydrogen compound having such a low pKa easily releases H⁺, it easily activates the epoxy group-containing compound. Therefore, it can cure the alicyclic epoxy compound or the like even in the absence of a catalyst.

In the present specification, the pKa represents an acid dissociation equilibrium constant, and is defined as pKa = -log Ka, Ka = [H₃O⁺][B⁻]/[BH] (BH: organic acid, B⁻: conjugate base of organic acid). When two or more acidic groups are contained in one molecule of the curing agent, the pKa means a first dissociation constant pKa1.

The acid dissociation constant (pKa) of the active hydrogen compound varies depending on the structure of the active hydrogen compound. That is, the pKa of a compound in which a functional group having active hydrogen is directly bonded to an aromatic group (aromatic ring) is lower than the pKa of a compound in which the functional group is directly bonded to an aliphatic group. The pKa is lower in the order of thiol < alcohol < amine.

The acid dissociation constant (pKa) also varies depending on the type of the solvent around the active hydrogen compound. In the present specification, pKa in water is used as an indicator in order to distinguish between the active hydrogen compound (B1) and the active hydrogen compound (B2). The pKa can be calculated from the concentration of the substance of interest and a hydrogen ion concentration of water by measuring the hydrogen ion concentration using, for example, a pH meter. Alternatively, when the pKa value is known from literature or the like (e.g., pKa Data Compiled by R. Williams, https://organicchemistrydata.org/hansreich/resources/pka/pka_data/pka-compilation-williams.pdf), the value may be employed. When the pKa value is not known from literature or the like, the active hydrogen compound may be described by a rational formula, and the pKa value of a compound corresponding to two or more carbon atoms from the carbon atom bonded to the functional group having active hydrogen (compound corresponding to a site having two or more carbon atoms starting from the carbon atom bonded to the functional group having active hydrogen) may be employed.

In the case of a water-insoluble active hydrogen compound, it can be estimated from the structure around the functional group serving as active hydrogen. For example, the pKa of 4,4'-thiobisbenzenethiol can be the pKa value of thiophenol.

Examples of the active hydrogen compound (B1) having a pKa of 10 or less include thiol-based compounds having a pKa of 10 or less and bisphenol-based compounds having a pKa of 10 or less. The bisphenol-based compound may be a compound in which an active hydrogen functional group such as thiol or alcohol is directly bonded to a conjugated structure such as a benzene ring. In the curing agent in which the conjugated structure and the active hydrogen functional group are bonded to each other as described above, the conjugated base state is stabilized, and thus hydrogen ions are easily released.

The bisphenol-based compound having a pKa of 10 or less is a compound having two phenolic hydroxyl groups in one molecule, and examples thereof include bisphenols such as 2,2-bis(4-hydroxyphenyl)propane (bisphenol A), 1,1-bis(4-hydroxyphenyl)ethane (bisphenol AD), bis(hydroxyphenyl)methane (bisphenol F), bisphenolfluorene, and biscresolfluorene.

The thiol-based compound having a pKa of 10 or less only needs to be a compound having two or more thiol groups in one molecule and having a pKa satisfying the above range, and is preferably a thiol-based compound containing an aromatic ring (aromatic thiol-based compound). The number of aromatic rings contained in one molecule of the aromatic thiol-based compound may be at least 1, preferably from 1 to 3, and more preferably from 1 to 2.

Examples of the aromatic thiol-based compound include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracenedimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane.

**The** aromatic thiol-based compound may further contain a sulfur atom besides the thiol group. Examples of such an aromatic thiol-based compound include 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, 1,3,5-triazine-2,4,6-trithiol (thiocyanuric acid), and 4,4'-thiobisbenzenethiol. One type of these can be used alone, or two or more types thereof can be used in combination.

The thiol equivalent of the thiol-based compound having a pKa of 10 or less is not particularly limited, but is, for example, 300 g/eq or less, and preferably 150 g/eq or less. When the thiol equivalent is within this range, the curing reactivity of the curing agent-containing resin composition and the refractive index of the resulting cured resin composition are further easily enhanced.

The number of thiol groups (number of functional groups) contained in one molecule of the thiol-based compound having a pKa of 10 or less is preferably from 2 to 10, more preferably from 2 to 4, and more preferably 3. When the number of thiol groups is within this range, the curing reactivity of the curing agent-containing resin composition and the refractive index of the resulting cured resin composition are further easily enhanced.

The weight average molecular weight of the thiol-based compound having a pKa of 10 or less is not particularly limited, but is preferably from 100 to 10000, and more preferably from 100 to 1000. The weight average molecular weight can be measured by GPC in terms of polystyrene.

In particular, the active hydrogen compound (B1) having a pKa of 10 or less preferably includes a thiol-based compound having a pKa of 10 or less, and more preferably includes a thiol-based compound having a pKa of 7 or less.

The active hydrogen compound (B1) having a pKa of 10 or less is preferably used in an amount of from 15 to 400 parts by mass, relative to 100 parts by mass of the total amount of the epoxy group-containing compounds in the first resin composition. When the amount of the active hydrogen compound (B1) to be used is 15 parts by mass or more, the alicyclic epoxy compound or the like is more easily activated, and sufficient curing reactivity is easily achieved. When the amount of the active hydrogen compound (B1) to be used is 400 parts by mass or less, an increase in viscosity of the curing agent-containing resin composition is easily suppressed, and thus the handleability is much less likely to be impaired. From the same viewpoint, the amount of the active hydrogen compound (B1) to be used is more preferably from 30 to 200 parts by mass, relative to 100 parts by mass of the total amount of the epoxy group-containing compounds.

### Case 2)

In the above case 2), the active hydrogen compound (B2) having a pKa of more than 10 and the cationic catalyst (C1) are used as components that cure the alicyclic epoxy compound.

### Active Hydrogen Compound (B2)

The pKa of the active hydrogen compound (B2) in the above case 2) is more than 10, preferably from 10 to 14. Such an active hydrogen compound having a high pKa is less likely to release H⁺, and thus is less likely to activate the alicyclic epoxy compound or the like alone. Therefore, the alicyclic epoxy compound or the like can be cured by further combining the cationic catalyst (C1) capable of producing H⁺.

The active hydrogen compound (B2) having a pKa of more than 10 preferably includes an amine-based compound having a pKa of more than 10 or a thiol-based compound having a pKa of more than 10.

The amine-based compound having a pKa of more than 10 only needs to be a compound having two or more amino groups in one molecule and having a pKa satisfying the above range, preferably 11 or more, and more preferably 15 or more, and preferably includes an amine-based compound containing an aromatic ring (aromatic amine-based compound). Examples of the aromatic amine-based compound include 4,4'-diaminodiphenyl sulfide (ASD, available from Seika Corporation) and 4,4'-diaminodiphenyl sulfone (SEIKACURE S, available from Seika Corporation).

The thiol-based compound having a pKa of more than 10 only needs to be a compound having two or more thiol groups in one molecule and having a pKa satisfying the above range, and is preferably a thiol-based compound not containing an aromatic ring (aliphatic thiol-based compound). The aliphatic thiol-based compound may be an aliphatic thiol-based compound having an ester bond in the molecule, or may be an aliphatic thiol-based compound having no ester bond in the molecule.

Examples of the aliphatic thiol-based compound having an ester bond in the molecule include trimethylolpropane tris(3-mercaptopropionate) (TMMP, available from SC Organic Chemical Co., Ltd.), tris-[(3-mercaptopropionyloxy)-ethyl]-isocyanurate (TEMPIC, available from SC Organic Chemical Co., Ltd.), pentaerythritol tetrakis(3-mercaptopropionate) (PEMP, available from SC Organic Chemical Co., Ltd.), tetraethyleneglycol bis(3-mercaptopropionate) (EGMP-4, available from SC Organic Chemical Co., Ltd.), dipentaerythritol hexakis(3-mercaptopropionate) (DPMP, available from SC Organic Chemical Co., Ltd.), pentaerythritol tetrakis(3-mercaptobutyrate) (Karenz MT (registered trademark) PE1, available from Showa Denko K.K.), 1,3,5-tris(3-mercaptobutyryloxyethyl)-1,3,5-triazine-2,4,6(1H,3H,5H)-trione (Karenz MT (registered trademark) NR1, available from Showa Denko K.K.), and 1,4-bis(3-mercaptobutyryloxy)butan (Karenz MT (registered trademark) BD1, available from Showa Denko K.K.).

Examples of the aliphatic thiol-based compound having no ester bond in the molecule include a compound represented by Formula (1) or (2) below.

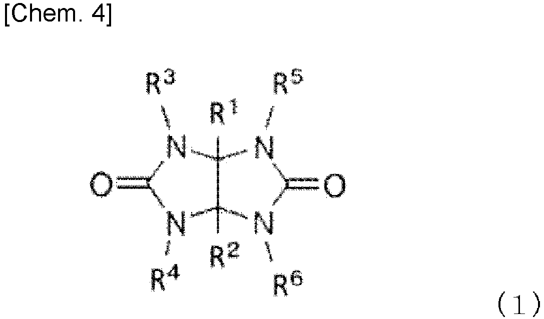

In Formula (1), R¹ and R² are each independently selected from the group consisting of a hydrogen atom and an alkyl group having from 1 to 12 carbons. R³, R⁴, R⁵ and R⁶ are each independently selected from the group consisting of a mercaptomethyl group, a mercaptoethyl group, and a mercaptopropyl group.

Examples of the compound represented by Formula (1) include 1,3,4,6-tetrakis(2-mercaptoethyl)glycoluril (TS-G, available from Shikoku Chemicals Corporation), (1,3,4,6-tetrakis(3-mercaptopropyl)glycoluril (C3 TS-G, available from Shikoku Chemicals Corporation), 1,3,4,6-tetrakis(mercaptomethyl)glycoluril, 1,3,4,6-tetrakis(mercaptomethyl)-3a-methylglycoluril, 1,3,4,6-tetrakis(2-mercaptoethyl)-3a-methylglycoluril, 1,3,4,6-tetrakis(3-mercaptopropyl)-3a-methylglycoluril, 1,3,4,6-tetrakis(mercaptomethyl)-3a,6a-dimethylglycoluril, 1,3,4,6-tetrakis(2-mercaptoethyl)-3a,6a-dimethylglycoluril, and 1,3,4,6-tetrakis(3-mercaptopropyl)-3a,6a-dimethylglycoluril. Of these, 1,3,4,6-tetrakis(2-mercaptoethyl)glycoluril and 1,3,4,6-tetrakis(3-mercaptopropyl)glycoluril are particularly preferred.
[Chem. 5]

(R⁸)ₘ-A-(R⁷-SH)ₙ (2)

In Formula (2),
A is a residue of a polyhydric alcohol containing n + m hydroxyl groups.
R⁷ is independently an alkylene group having from 1 to 10 carbons.
R⁸ is independently a hydrogen atom or an alkyl group having from 1 to 10 carbons.
m is an integer of 0 or more.
n is an integer of 3 or more.

Examples of the compound represented by Formula (2) include pentaerythritol tripropanethiol (Multhiol Y-3, available from SC Organic Chemical Co., Ltd.) and pentaerythritol tetrapropanethiol. Of these, pentaerythritol tripropanethiol is particularly preferred.

In addition, the aliphatic thiol-based compound having no ester bond in the molecule to be used may be a tri- or higher-functional polythiol compound having two or more sulfide bonds in the molecule. Examples of such a thiol compound include polythiol compounds having no cyclic structure, such as 1,2,3-tris(mercaptomethylthio)propane, 1,2,3-tris(2-mercaptoethylthio)propane, 1,2,3-tris(3-mercaptopropylthio)propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, 1,1,3,3-tetrakis(mercaptomethylthio)propane, 1,1,2,2-tetrakis(mercaptomethylthio)ethane, 1,1,5,5-tetrakis(mercaptomethylthio)-3-thiapentane, 1,1,6,6-tetrakis(mercaptomethylthio)-3,4-dithiahexane, 2,2-bis(mercaptomethylthio)ethanethiol, 3-mercaptomethylthio-1,7-dimercapto-2,6-dithiaheptane, 3,6-bis(mercaptomethylthio)-1,9-dimercapto-2,5,8-trithianonane, 3-mercaptomethylthio-1,6-dimercapto-2,5-dithiahexane, 1,1,9,9-tetrakis(mercaptomethylthio)-5-(3,3-bis(mercaptomethylthio)-1-thiapropyl)-3,7-dithianonane, tris(2,2-bis(mercaptomethylthio)ethyl)methane, tris(4,4-bis(mercaptomethylthio)-2-thiabutyl)methane, tetrakis(2,2-bis(mercaptomethylthio)ethyl)methane, tetrakis(4,4-bis(mercaptomethylthio)-2-thiabutyl)methane, 3,5,9,11-tetrakis(mercaptomethylthio)-1,13-dimercapto-2,6,8,12-tetrathiatridecane, 3,5,9,11,15,17-hexakis(mercaptomethylthio)-1,19-dimercapto-2,6,8,12,14,18-hexathianonadecane, 9-(2,2-bis(mercaptomethylthio)ethyl)-3,5,13,15-tetrakis(mercaptomethylthio)-1,17-dimercapto-2,6,8,10,12,16-hexathiaheptadecane, 3,4,8,9-tetrakis(mercaptomethylthio)-1,11-dimercapto-2,5,7,10-tetrathiaundecane, 3,4,8,9,13,14-hexakis(mercaptomethylthio)-1,16-dimercapto-2,5,7,10,12,15-hexathiahexadecane, 8-[bis(mercaptomethylthio)methyl]-3,4,12,13-tetrakis(mercaptomethylthio)-1,15-dimercapto-2,5,7,9,11,14-hexathiapentadecane, 4,6-bis[3,5-bis(mercaptomethylthio)-7-mercapto-2,6-dithiaheptylthio]-1,3-dithiane, 4-[3,5-bis(mercaptomethylthio)-7-mercapto-2,6-dithiaheptylthio]-6-mercaptomethylthio-1,3-dithiane, 1,1-bis[4-(6-mercaptomethylthio)-1,3-dithianylthio]-1,3-bis(mercaptomethylthio)propane, 1-[4-(6-mercaptomethylthio)-1,3-dithianylthio]-3-[2,2-bis(mercaptomethylthio)ethyl]-7,9-bis(mercaptomethylthio)-2,4,6,10-tetrathiaundecane, 3-[2-(1,3-dithietanyl)]methyl-7,9-bis(mercaptomethylthio)-1,11-dimercapto-2,4,6,10-tetrathiaundecane, 9-[2-(1,3-dithietanyl)]methyl-3,5,13,15-tetrakis(mercaptomethylthio)-1,17-dimercapto-2,6,8,10,12,16-hexathiaheptadecane, and 3-[2-(1,3-dithietanyl)]methyl-7,9,13,15-tetrakis(mercaptomethylthio)-1,17-dimercapto-2,4,6,10,12,16-hexathiaheptadecane; and
polythiol compounds having a cyclic structure, such as 4,6-bis[4-(6-mercaptomethylthio)-1,3-dithianylthio]-6-[4-(6-mercaptomethylthio)-1,3-dithianylthio]-1,3-dithiane, 4-[3,4,8,9-tetrakis(mercaptomethylthio)-11-mercapto-2,5,7,10-tetrathiaundecyl]-5-mercaptomethylthio-1,3-dithiolane, 4,5-bis[3,4-bis(mercaptomethylthio)-6-mercapto-2,5-dithiahexylthio]-1,3-dithiolane, 4-[3,4-bis(mercaptomethylthio)-6-mercapto-2,5-dithiahexylthio]-5-mercaptomethylthio-1,3-dithiolane, 4-[3-bis(mercaptomethylthio)methyl-5,6-bis(mercaptomethylthio)-8-mercapto-2,4,7-trithiaoctyl]-5-mercaptomethylthio-1,3-dithiolane, 2-{bis[3,4-bis(mercaptomethylthio)-6-mercapto-2,5-dithiahexylthio]methyl}-1,3-dithietane, 2-[3,4-bis(mercaptomethylthio)-6-mercapto-2,5-dithiahexylthio]mercaptomethylthiomethyl-1,3-dithietane, 2-[3,4,8,9-tetrakis(mercaptomethylthio)-11-mercapto-2,5,7,10-tetrathiaundecylthio]mercaptomethylthiomethyl-1,3-dithietane, 2-[3-bis(mercaptomethylthio)methyl-5,6-bis(mercaptomethylthio)-8-mercapto-2,4,7-trithiaoctyl]mercaptomethylthiomethyl-1,3-dithietane, and 4-{1-[2-(1,3-dithietanyl)]-3-mercapto-2-thiapropylthio}-5-[1,2-bis(mercaptomethylthio)-4-mercapto-3-thiabutylthio]-1,3-dithiolane.

The thiol equivalent of the thiol-based compound having a pKa of more than 10 is not particularly limited, but is, for example, from 90 to 150 g/eq, and preferably from 90 to 140 g/eq. When the thiol equivalent is within this range, the curing reactivity of the curing agent-containing resin composition is further easily enhanced, and the refractive index, bending modulus of elasticity, and the like of the resulting cured resin composition are also further easily enhanced.

The number of thiol groups (number of functional groups) contained in one molecule of the thiol-based compound having a pKa of more than 10 is preferably from 2 to 4, more preferably from 3 to 4, and still more preferably 4. When the number of thiol groups is equal or greater than the lower limit, the curing reactivity of the curing agent-containing resin composition is further easily enhanced, and the refractive index, bending modulus of elasticity, and the like of the cured resin composition are also further easily enhanced. When the number of thiol groups is 4 or less, it is possible to further reduce the remaining unreacted thiol groups and to suppress deterioration of physical properties.

**The** weight average molecular weight of the thiol-based compound having a pKa of more than 10 is not particularly limited, but is preferably from 100 to 10000, more preferably from 100 to 1000. **The** weight average molecular weight can be determined by the same method as described above.

**The** active hydrogen compound (B2) having a pKa of more than 10 is preferably used in an amount of from 40 to 200 parts by mass, relative to 100 parts by mass of the total amount of the epoxy group-containing resins (preferably the total amount of the alicyclic epoxy resins). When the amount of the active hydrogen compound (B2) to be used is 40 parts by mass or more, the alicyclic epoxy compound is more easily activated, and the curing reactivity is more easily enhanced. When the amount of the active hydrogen compound (B2) to be used is 200 parts by mass or less, an increase in viscosity of the curing agent-containing resin composition can be suppressed, and the handleability of the composition is less likely to be impaired. From the same viewpoint, the amount of the active hydrogen compound (B2) to be used is more preferably from 50 to 150 parts by mass, relative to 100 parts by mass of the total amount of the epoxy group-containing resins (preferably the total amount of the alicyclic epoxy resins).

### Cationic Catalyst (C1)

The cationic catalyst (C1) is a compound that promotes the release of H⁺, and is a compound that promotes the reaction between the epoxy group-containing compound and the active hydrogen compound without promoting the self-polymerization of the epoxy group-containing compound alone. The fact that self-polymerization is not promoted can be confirmed by the fact that a mixture of only the epoxy group-containing compound and the catalyst does not exhibit an exothermic reaction even when heat is applied (and is not cured). In the self-polymerization reaction, two epoxy groups react with one epoxy group, that is, an alicyclic epoxy compound containing two epoxy groups reacts with four epoxy groups per molecule, and thus the degree of crosslinking increases and the toughness easily decreases. In contrast, the cationic catalyst (C1) serves to promote activation of the epoxy group and activation of the active hydrogen compound without causing such a self-polymerization reaction. Direct addition of the catalyst (C1) serving as a cation allows the reaction to proceed rapidly. Therefore, it can also be used as a catalyst for a two-component type curing agent-containing resin composition in an environment where heating is impossible, such as in a cold district, or in a case where it is desired to suppress heating/light irradiation energy required for generating cations, such as in a case of the catalyst (C2).

The activation of the epoxy group refers to interaction with oxygen of the epoxy group to facilitate nucleophilic attack on carbon of the epoxy group. Examples of a compound capable of interacting with oxygen of the epoxy group include positively charged compounds. As a reaction mechanism, the oxygen atom of the epoxy group interacts with the positively charged catalyst, the carbon atom of the epoxy group becomes slightly positively charged, and the nucleophilic attack of the activated hydrogen compound is promoted. The activation of the active hydrogen compound is abstraction of hydrogen from the active hydrogen compound.

Therefore, the cationic catalyst (C1) is a base used at the time of curing the epoxy group-containing compound, and is preferably a compound which maintains a positively charged state after hydrogen abstraction and has a steric structure capable of interacting with oxygen of the epoxy group.

Such a cationic catalyst (C1) is preferably an amine. Examples of the amine include ammonium salts, amines having an amidine structure, and amines having a guanidine structure.

Examples of the ammonium salts include triethylmethylammonium 2-ethylhexanoate (product name: U-CAT 18X, available from San-Apro Ltd.).

Examples of the amines having an amidine structure include diazabicycloundecene (DBU) and diazabicyclononene (DBN), and examples of salts of the amines include 2-ethylhexanoate salt of DBU (product name: SA1, available from San-Apro Ltd.).

Examples of the amines having a guanidinium structure (including biguanide) include tetramethylguanidine, and examples of salts thereof include 1,2-dicyclohexyl-4,4,5,5-tetramethylbiguanidium n-butyltriphenylborate (product name: WPGK-300 (FUJIFILM Wako)).

Among these, an amine having an amidine structure or a salt thereof, and an amine having a guanidine structure or a salt thereof are preferred, and an amine having a guanidine structure or a salt thereof is more preferred.

The amount of the cationic catalyst (C1) to be used is preferably from 1 to 10 parts by mass, relative to 100 parts by mass of the total amount of the epoxy group-containing compounds. When the amount of the cationic catalyst (C1) to be used is 1 part by mass or more, the alicyclic epoxy compound or the like is more easily activated, and sufficient curing reactivity is easily achieved. When the amount of the cationic catalyst (C1) to be used is 10 parts by mass or less, the time during which the resin composition can be used without being cured after addition of the catalyst (referred to as usable time) can be made longer. In addition, it is possible to further suppress deterioration of physical properties such as glass transition temperature and elastic modulus due to an excessive amount of the catalyst remaining in the cured resin composition. From the same viewpoint, the amount of the cationic catalyst (C1) to be used is more preferably from 1 to 5 parts by mass, relative to 100 parts by mass of the total amount of the epoxy group-containing compounds.

### Case 3)

In the above case 3), the active hydrogen compound (B2) having a pKa of more than 10 and the catalyst (C2) that produces cations through a reaction or light irradiation are used as components that cure the epoxy group-containing compound.

As described above, an active hydrogen compound having a high pKa is less likely to release H⁺, and thus is less likely to activate the alicyclic epoxy compound or the like alone. Therefore, the curing reactivity of the alicyclic epoxy compound or the like can be enhanced by further combining the catalyst (C2) capable of producing H⁺ through a reaction or light irradiation. In addition, since the curing timing can be adjusted by the timing of the reaction or light irradiation, the compatibility between the curing reactivity and storage stability is easily achieved. In addition, the curing agent-containing resin composition containing the catalyst (C2) has fluidity even when stored at 40°C/24 h, for example, and is excellent in storage stability. Therefore, the catalyst (C2) is particularly suitable as a catalyst for one-component type curing agent-containing resin composition.

### Active Hydrogen Compound (B2) Having pKa of More Than 10

As the active hydrogen compound (B2) having a pKa of more than 10, the same compounds as described above can be used. The active hydrogen compound (B2) is selected depending on the type of catalyst (C2). For example, when the catalyst (C2) is dicyandiamide, the active hydrogen compound (B2) is preferably an active hydrogen compound that reacts with dicyandiamide to produce guanidine (reaction promoting substance).

When the active hydrogen compound (B2) is a thiol-based compound, dicyandiamide reacts by heating as described below, to produce guanidine.

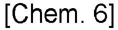

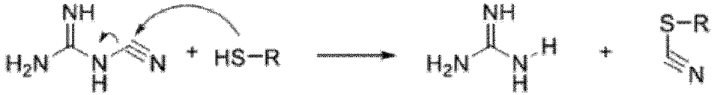

The resulting guanidine further reacts with the thiol-based compound to form a guanidinium ion, which promotes ring opening of the alicyclic epoxy resin (see below).

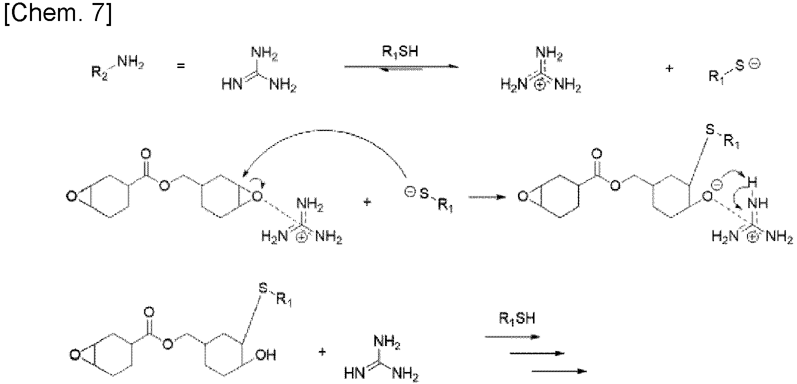

A compound that reacts with dicyandiamide to produce guanidine is preferably an aliphatic thiol-based compound, more preferably a tetra- or higher-functional aliphatic thiol-based compound, and still more preferably 1,3,4,6-tetrakis(2-mercaptoethyl)glycoluril and 1,3,4,6-tetrakis(3-mercaptopropyl)glycoluril.

The active hydrogen compound (B2) having a pKa of more than 10 may be used in the same amount as in the above case 2).

### Catalyst (C2) That Produces Cation through Reaction or Light Irradiation

The catalyst (C2) that produces cations through a reaction or light irradiation is a catalyst that produces cations through a reaction with the active hydrogen compound (B2) or light irradiation.

The catalyst that produces cations through a reaction has the same function as the cationic catalyst (C1), except that it contributes to activation of the epoxy group by being positively charged after activating the active hydrogen compound (B2). Examples of such a catalyst include dicyandiamide. It is desirable in that the initiation of curing can be controlled by controlling the reaction with the active hydrogen compound (B2).

Examples of the catalyst that produces cations through light irradiation include a photobase generator. Examples of the photobase generator include a carboxylate salt, a borate anion-containing salt, and a quaternary ammonium salt.

When the carboxylate salt or the borate anion-containing salt is used, a strong base such as an amidine, guanidine, or phosphazene base can be generated from a weak base such as an aliphatic amine-based compound. Therefore, the reaction with the alicyclic epoxy compound or the like easily proceeds in a chain reaction, and the curing reactivity is easily enhanced. When the quaternary ammonium salt is used, it preferably contains imidazole or amidine as a base-reactive substance from the viewpoint of enhancing the curing reactivity.

Among them, (8E)-8-ethylidene-4-methoxy-5,6,7,8 tetrahydronaphthalene-1-carboxylic acid 1,8-diazabicyclo[5,4,0]undec-7-ene, 1,2-diisopropyl-3-[bis(dimethylamino)methylene]guanidium 2-(3-benzoylphenyl)propionate, 1,2-dicyclohexyl-4,4,5,5-tetramethyldiguanium n-butyltriphenylborate, or (2-(9-oxoxanthen-2-yl)propionic acid 1,5,7-triazabicyclo[4,4,0]dec-5-ene)) is preferable from the viewpoint of easily producing a strong base and easily enhancing the curing reactivity.

The amount of the catalyst (C2) to be used is preferably from 0.5 to 10 parts by mass, relative to 100 parts by mass of the total amount of the epoxy group-containing compounds. When the amount of the catalyst (C2) to be used is 0.5 parts by mass or more, the alicyclic epoxy compound or the like is more easily activated, and sufficient curing reactivity is easily achieved. When the amount of the catalyst (C2) to be used is 10 parts by mass or less, it is possible to further suppress deterioration of physical properties such as glass-transition temperature and elastic modulus due to an excessive amount of the catalyst remaining in the cured resin composition. From the same viewpoint, the amount of the catalyst (C2) to be used is more preferably from 1 to 5 parts by mass, relative to 100 parts by mass of the total amount of the epoxy group-containing compounds.

In the case of the catalyst (C2) that produces cations through a reaction, the amount of the catalyst (C2) to be used is preferably from 0.5 to 10 parts by mass, and more preferably from 1 to 5 parts by mass, relative to 100 parts by mass of the active hydrogen compound (B2). When the amount of the catalyst (C2) to be used is within the above range, a sufficient amount of guanidine is easily produced through the reaction with the active hydrogen compound (B2), and the curing reactivity is more easily enhanced.

When the catalyst (C2) that produces cations through light irradiation is used, a sensitizer may be further used in combination. The sensitizer has a function of improving the sensitivity of the curing reaction. The sensitizer only needs to be a compound capable of transferring stimulation energy such as heat or light to another substance, and, for example, a sensitizer containing a naphthalene structure, an anthracene structure, or a thioxanthone structure can be used. The mass ratio of the sensitizer to the catalyst (C2) (sensitizer/catalyst (C2)) can be, for example, from 0.1 to 0.5 from the viewpoint of enhancing the activity of the catalyst (C2).

When a thiol-based compound is used as the active hydrogen compound (B), the pot life can be extended by using a stabilizer as a curing accelerator. Examples of the stabilizer include borates such as triethyl borate, triisopropyl borate, trimethyl borate, tri-n-propyl borate, and tri-n-butyl borate.

### 4) Others

When the (iii) addition reaction between the epoxy group and the active hydrogen compound is performed, the amount of an acid anhydride-based curing agent to be used is preferably small from the viewpoint of further shortening the curing time of the curing agent-containing resin composition in any case. Specifically, the amount of the acid anhydride-based curing agent to be used is preferably 40 parts by mass or less, more preferably 20 parts by mass or less, and still more preferably 10 parts by mass or less, relative to 100 parts by mass of the curing agent-containing resin composition.

In addition, it has been shown that the active hydrogen compound (B) and the optional curing catalyst (C) are combined in the case of the (iii) addition reaction between the epoxy group and the active hydrogen compound, but, in addition to this, a two-component type curing agent-containing resin composition composed of a combination of a first liquid and a second liquid which are mixed at the time of use may be prepared.

For example, when the cationic catalyst (C1) is used, a two-component type curing agent-containing resin composition in which a first liquid containing the first resin composition described above and the cationic catalyst (C1) and a second liquid containing the active hydrogen compound (B2) are combined may be prepared. The first resin composition described above only needs to be added to at least either the first liquid or the second liquid. In the two-component type curing agent-containing resin composition, the viscosities of the first liquid and the second liquid are preferably close to each other from the viewpoint of ease of mixing. That is, in order to adjust the viscosities of the first liquid and the second liquid, the first resin composition may be added to both the first liquid and the second liquid.

Also, when the catalyst (C2) is used, a two-component type curing agent-containing resin composition in which a first liquid containing the first resin composition described above and a second liquid containing the active hydrogen compound (B2) and the catalyst (C2) are combined may be prepared. In the two-component type curing agent-containing resin composition, the viscosities of the first liquid and the second liquid are preferably close to each other from the viewpoint of ease of mixing. In order to adjust the viscosities of the first liquid and the second liquid, the first resin composition described above may be added to both the first liquid and the second liquid. For example, a two-component type curing agent-containing resin composition in which a first liquid containing the first resin composition described above and the catalyst (C2) and a second liquid containing the first resin composition described above and the active hydrogen compound (B2) are combined may be prepared.

In the (iii) addition reaction between the epoxy group and the active hydrogen compound, when a bifunctional epoxy compound is used as the epoxy group-containing compound (alicyclic epoxy compound or the like) in the first resin composition described above and a bifunctional compound is used as the active hydrogen compound (B1) or (B2), the resulting cured resin composition exhibits thermoplasticity.

Here, in the (i) copolycondensation reaction between the epoxy group and the acid anhydride group, the epoxy group of the alicyclic epoxy resin reacts with the acid anhydride, then undergoes ring opening, and becomes an oxygen anion (-O⁻). Therefore, the epoxy group reacts (not only with the acid anhydride but) also with another alicyclic epoxy resin and is likely to cause three-dimensional crosslinking (see the following reaction scheme and Reaction Example 1).

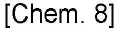

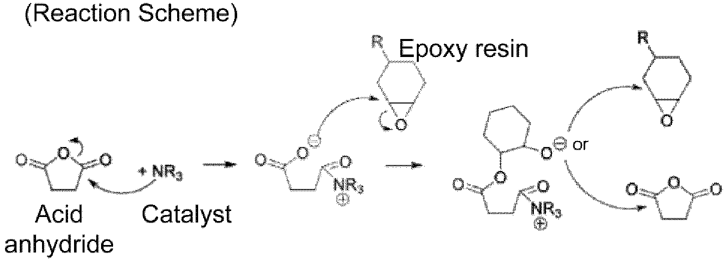

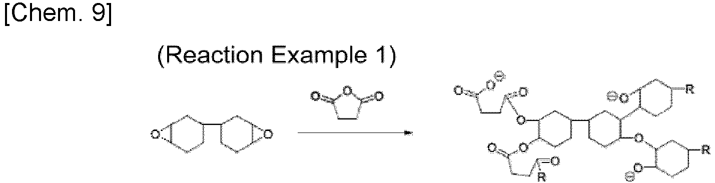

Similarly, in the (ii) self-polymerization of the epoxy group with the basic catalyst or acidic catalyst, three-dimensional crosslinking is likely to be caused by a reaction between the alicyclic epoxy resins.

Meanwhile, in the (iii) addition reaction between the epoxy group and the active hydrogen compound, the epoxy group of the alicyclic epoxy resin reacts with the active hydrogen compound and then becomes -OH by a cation (H⁺), and therefore does not react with another alicyclic epoxy resin but reacts only with the active hydrogen compound (see the following reaction scheme and Reaction Example 2).

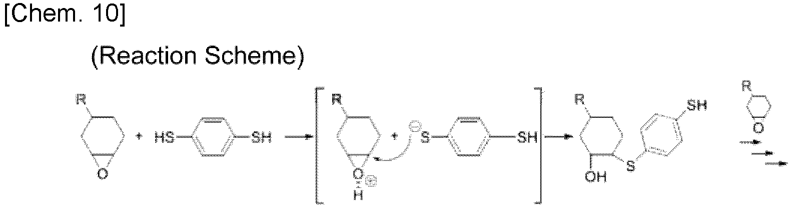

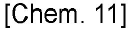

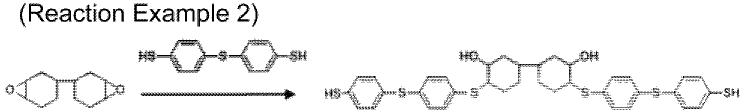

That is, since (iii) the reaction proceeds without going through an oxygen anion, the alicyclic epoxy resins are less likely to react with each other. Therefore, three-dimensional crosslinking is likely to be suppressed in the (iii) addition reaction between the epoxy group and the active hydrogen compound, as compared with the case of (i) or (ii). Since less crosslinking enhances toughness, the cured resin composition produced by the (iii) addition reaction between the epoxy group and the active hydrogen compound tends to have an increased fracture toughness value.

### (iv) Others

In any case, when the curing agent-containing resin composition is used in a coating material or the like, the curing agent-containing resin composition according to an embodiment of the present application has a low viscosity although it contains cellulose fibers and the like as described above. Therefore, it is expected that the composition can be used without adding a solvent. However, when the viscosity needs to be further reduced, a solvent may be further used. The amount of the solvent to be used is preferably from 0 to 100 mass%, more preferably from 0 to 50 mass%, and still more preferably from 0 to 20 mass% relative to the nonvolatile components of the curing agent-containing resin composition.

### (v) Manufacturing Method for Cured Resin Composition

In any case, the cured resin composition can be manufactured by heating the curing agent-containing resin composition containing the above-described first resin composition, curing agent, and the like, or by irradiating the curing agent-containing resin composition with light.

The heating temperature varies depending on the types of the curing agent and the catalyst, but is preferably 200°C or lower and more preferably 60°C or higher and 150°C or lower in order to suppress decomposition of the cellulose fibers in the first resin composition. The heating time may be short as long as curing is achieved. However, in order to achieve sufficient curing, the heating time is preferably 0.1 hours or more and 10 hours or less, and more preferably 0.5 hours or more and 8 hours or less.

Meanwhile, when the curing agent resin composition contains the catalyst (C2) that produces cations by means of light, light irradiation is performed. Light irradiation conditions at this time may be such that a base is generated from the catalyst (C2). The wavelength of the light to be irradiated is preferably, for example, from 200 to 500 nm. The irradiation dose is preferably about from 10 to 10000 mJ/cm². After cations are produced through light irradiation, curing may be performed at a low temperature equal to or lower than room temperature, or may be performed in a short time by increasing the temperature to the heating temperature range described above.

### (vi) Application of Cured Resin Composition

The thermoplastic and thermosetting cured resin compositions produced from the first resin composition contain cellulose fibers, and thus have high strength. In addition, these cured resin compositions further contain rubber particles, and thus also have high toughness. Therefore, the cured resin composition can be used in applications to which composite materials containing a resin and a reinforcing material have been applied, for example, various applications such as electric appliances, building materials, vehicles such as automobiles and trains, and aircrafts.

### 4. Rubber-Bonded Cellulose Fibers

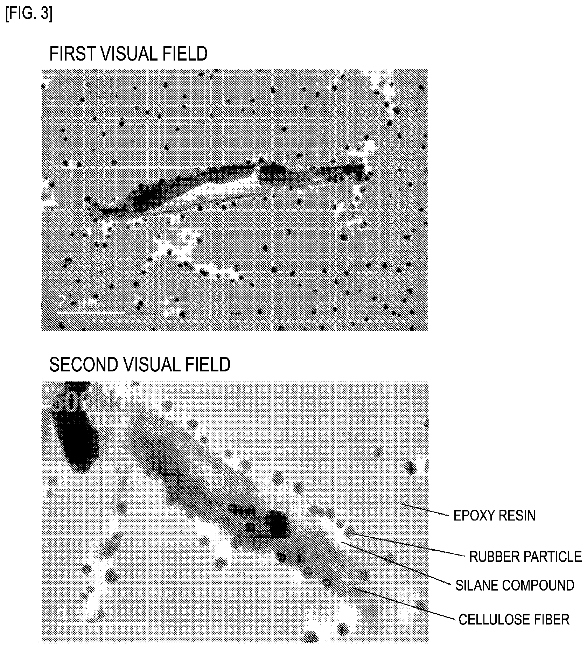

The rubber-bonded cellulose fibers according to an embodiment of the present invention contain cellulose fibers; a plurality of rubber particles disposed on surfaces of the cellulose fibers and having an average particle size of 300 nm or less; and a silane compound that bonds the cellulose fibers and the rubber particles. That is, in the rubber-bonded cellulose fibers, the rubber particles are bonded to the cellulose fibers via the silane compound. The structure is confirmed by, for example, a scanning electron microscope. In general, rubber particles have low compatibility to cellulose fibers, and when the rubber particles and the cellulose fibers are merely mixed, they repel each other. Referring to a photograph (first visual field in FIG. 3) obtained by observing the first resin composition produced in Examples described below with a scanning electron microscope, it is clear that there is a gap between rubber-bonded cellulose fibers and free rubber particles, and the cellulose fibers and the rubber particles repel each other. In other words, it is difficult to bond the cellulose fibers and the rubber particles merely by mixing them. In contrast, in the rubber-bonded cellulose fibers according to an embodiment of the present invention, the silane compound is disposed between the cellulose fibers and the rubber particles, and thus they can be bonded to each other.

When the rubber-bonded cellulose fibers in which rubber particles are bonded to the peripheries of cellulose fibers are dispersed in a resin, the rubber-bonded cellulose fibers are less likely to be entangled with one another or to form hydrogen bonds. Therefore, the rubber-bonded cellulose fibers are easily homogeneously dispersed in any resin. This is likely to result in a decrease in the viscosity of the resin composition containing the resin and the rubber-bonded cellulose fibers, or a decrease in melt viscosity during melt-kneading of the resin and the rubber-bonded cellulose fibers. In addition, dispersion of the rubber-bonded cellulose fibers in a resin provides an advantage of increases in breaking point, elastic modulus, and maximum point stress, as compared with the case of dispersion of untreated cellulose fibers.

Here, the type, average fiber diameter, aspect ratio, and the like of the cellulose fibers contained in the rubber-bonded cellulose fibers are the same as those of the cellulose fibers described above in the first resin composition.

The rubber particles only need to be particles having an average particle size of 300 nm or less, and are preferably rubber particles having carboxy group-containing surfaces as described above in the first resin composition. Preferably, some or all of the carboxy groups on the surfaces of the rubber particles react with an amino group of the silane compound described below to form an amide bond. The rubber-bonded cellulose fibers may contain only one type or two or more types of rubber particles.

Here, the average particle size of the rubber particles is preferably 10 nm or more and 300 nm or less, and more preferably 20 nm or more and 100 nm or less. When the average particle size of the rubber particles is excessively small, the rubber particles may be covered with the silane compound, and the rubber particles may be less likely to exhibit their properties. In contrast, when the average particle size is 10 nm or more, the rubber particles are likely to be exposed on the surfaces of the rubber-bonded cellulose fibers, and the above-described viscosity reducing effect is likely to be achieved at the time of mixing with a resin. The average particle size may be measured based on JIS Z8825 as long as the rubber particles can be separated from the rubber-bonded cellulose fibers, or may be specified by directly observing/measuring the particle sizes of 100 or more rubber particles with a transmission electron microscope or the like.

The rubber particles are preferably uniformly disposed around the cellulose fibers. The amount (mass) of the rubber particles relative to the amount (mass) of the cellulose fibers is appropriately determined depending on the fiber diameter and fiber length of the cellulose fibers, and is preferably 0.1 times or more and 10 times or less, and more preferably 0.2 times or more and 3 times or less. When rubber particles are disposed, in such an amount, around the cellulose fibers, the viscosity at the time of mixing with a resin and the melt viscosity at the time of melt-kneading are likely to be further reduced.

Meanwhile, the silane compound is a compound for bonding the cellulose fibers and the rubber particles described above, and is preferably an amino group-containing silane coupling agent (aminosilane coupling agent) described above in the first resin composition. Preferably, some or all of the amino groups contained in the aminosilane coupling agent react with the carboxy groups of the rubber particles to form amide bonds. The rubber-bonded cellulose fibers may contain only one type or two or more types of silane compounds.

The amount (mass) of the silane compound is preferably equal to or greater than 0.1 times and equal to or less than 0.5 times, more preferably equal to or greater than 0.2 times and equal to or less than 0.4 times, and still more preferably equal to or greater than 0.25 times and equal to or less than 0.35 times the amount (mass) of the rubber particles described above. As described above, preferably, the peripheries of the rubber particles are not completely covered with the silane compound. Therefore, the amount of the silane compound is preferably equal to or less than 0.5 times the amount of the rubber particles. Meanwhile, the rubber particles are preferably firmly bonded to the peripheries of the cellulose fibers, and the amount of the silane compound is preferably equal to or greater than 0.1 times the amount of the rubber particles.

### 5. Manufacturing Method for Rubber-Bonded Cellulose Fibers

The manufacturing method for the rubber-bonded cellulose fibers described above is, for example, a method including a step of preparing a liquid mixture by mixing a dispersion medium, rubber particles having carboxy group-containing surfaces and having an average particle size of 300 nm or less, a silane compound containing an amino group, and cellulose fibers (liquid mixture preparation step); and a step of removing the dispersion medium from the liquid mixture (dispersion medium removal step). However, the manufacturing method for the rubber-bonded cellulose fibers is not limited to the exemplified method.

### (i) Liquid Mixture Preparation Step

In the liquid mixture preparation step, a dispersion medium, rubber particles having carboxy group-containing surfaces and having an average particle size of 300 nm or less, a silane compound containing an amino group, and cellulose fibers are mixed. Thus, a dispersion in which the above-described rubber-bonded cellulose fibers are dispersed in the dispersion medium is prepared. The rubber particles, the silane compound, and the cellulose fibers used in this step are the same as the components used for preparation of the first resin composition described above.

Meanwhile, the dispersion medium used for preparing the liquid mixture is not particularly limited as long as it does not react with the rubber particles, the silane compound, or the cellulose fibers and can homogeneously disperse them. Examples of the dispersion medium include an alicyclic epoxy compound, an alcohol having a relative dielectric constant of 8 or more and 18 or less, and an ester having a relative dielectric constant of 8 or more and 18 or less.

The alicyclic epoxy compound that can be used as the dispersion medium may be the same compound as the alicyclic epoxy compound used in the first resin composition described above. As described above, the alicyclic epoxy compound does not easily react with the silane compound containing an amino group, and further can homogeneously disperse the rubber particles. Therefore, it is suitable as the dispersion medium of the liquid mixture. When the alicyclic epoxy compound is used as the dispersion medium, the liquid mixture preparation step can be performed in the same manner as in the preparation method for the first resin composition described above.

In this case, the amount of the alicyclic epoxy compound to be used is not particularly limited as long as the rubber particles, the silane compound, and the cellulose fibers can be homogeneously dispersed therein, and is preferably 40 mass% or more and 90 mass% or less, and more preferably 50 mass% or more and 80 mass% or less, relative to the total amount of the rubber particles, the silane compound, and the cellulose fibers. When the amount is 40 mass% or more, each component is easily homogeneously dispersed. Meanwhile, when the amount is 90 mass% or less, the dispersion medium (alicyclic epoxy compound) is easily removed in the dispersion medium removal step described below.

Meanwhile, examples of the alcohol having a relative dielectric constant of 8 or more and 18 or less at 25°C include propylene glycol monomethyl ether, ethylene glycol monomethyl ether, isobutyl alcohol, isopentyl alcohol, o-cresol, m-cresol, p-cresol, phenol, 1-butanol, t-butyl alcohol, 1-octanol, and benzyl alcohol.

Examples of the ester having a relative dielectric constant of 8 or more and 18 or less at 25°C include propylene glycol monomethyl ether acetate.

The alcohol or ester having a relative dielectric constant of 8 or more and 18 or less at 25°C has high compatibility to the rubber particles, the silane compound, and the cellulose fibers. Therefore, the use of such an alcohol or ester as the dispersion medium allows the rubber particles, the silane compound, and the cellulose fibers to be homogeneously dispersed, and can sufficiently cause the reaction between the amino group of the silane compound and the carboxy groups of the rubber particles and the reaction between silicon of the silane compound and OH groups on the surfaces of the cellulose fibers. As the dispersion medium, one type of the alcohol or the ester may be used alone, or two or more types thereof may be used in combination. For example, an alcohol and an ester may be used in combination.

When an alcohol and/or an ester is used as the dispersion medium, the total amount thereof is preferably 4 mass% or more and 25 mass% or less and more preferably 8 mass% or more and 11 mass% or less, relative to the total amount of the cellulose fibers, the rubber particles, and the silane compound. When the amount of the dispersion medium is within the above range, the rubber particles, the silane compound, and the cellulose fibers can be more homogeneously dispersed.

Regardless of whichever dispersion medium is used, the method for mixing the dispersion medium, the rubber particles, the silane compound, and the cellulose fibers is not particularly limited, and the liquid mixture can be prepared by stirring with a known stirrer or the like. The mixing order of the dispersion medium, the rubber particles, the silane compound, and the cellulose fibers is not particularly limited, but it is more preferable to mix the silane compound and the cellulose fibers in this order in a state where the rubber particles are dispersed in the dispersion medium. When mixing is performed in this order, the carboxy groups of the rubber particles in the dispersion medium react with the amine of the silane compound to form a bonded state. Subsequently, upon addition of the cellulose fibers, hydroxyl groups around the cellulose fibers and Si atoms of the silane compound form siloxane bonds, and the rubber particles are disposed around the cellulose fibers.

When the components are mixed, the mixture may be heated to promote the above-described reaction. The upper limit temperature varies depending on the boiling point of the dispersion medium, and when heating is performed, the temperature is preferably 40°C or higher and 140°C or lower, and more preferably 60°C or higher and 120°C or lower. Furthermore, the heating time is preferably 10 minutes or more and 120 minutes or less, and more preferably 20 minutes or more and 60 minutes or less.

### (ii) Dispersion Medium Removal Step

After the preparation of the liquid mixture (dispersion of the rubber-bonded cellulose fibers), the dispersion medium is removed from the liquid mixture. **The** method for removing the dispersion medium is appropriately selected depending on the type of the dispersion medium.

When the dispersion medium is an alicyclic epoxy compound, it is preferable to dissolve the alicyclic epoxy compound in various solvents. The solvent to be used may be any component capable of dissolving only the alicyclic epoxy compound without denaturing the rubber-bonded cellulose fibers. Examples of the solvent include alcohols having a relative dielectric constant of 8 or more and 18 or less, such as propylene glycol methyl ether, and esters having a relative dielectric constant of 8 or more and 18 or less, such as propylene glycol monomethyl ether acetate. Such a solvent is less likely to cause aggregation of the rubber particles and has compatibility to the alicyclic epoxy resin. Therefore, when such a solvent is used, the alicyclic epoxy resin can be sufficiently washed away without denaturing the rubber-bonded cellulose fibers. Among the above-exemplified solvents, propylene glycol methyl ether is particularly preferred from the viewpoint of easy availability, the solubility of the alicyclic epoxy compound, and the like. Examples of the method for separating the rubber-bonded cellulose fibers after dissolution of the alicyclic epoxy compound include, but are not limited to, separation by filtration. After the separation of the rubber-bonded cellulose fibers, the fibers may be further subjected to a washing step or a drying step.

Meanwhile, when the dispersion medium is the alcohol or ether described above, the rubber-bonded cellulose fibers can be separated by removing the dispersion medium by filtration, drying, or the like. Also in this case, after the separation of the rubber-bonded cellulose fibers, the fibers may be further subjected to a washing step or a drying step.

As in the case of the first resin composition described above, the rubber-bonded cellulose fibers may be used in various applications while being dispersed in the dispersion medium without performing the dispersion medium removal step.

### 6. Second Resin Composition

The second resin composition according to an embodiment of the present invention is a composition containing a resin and a fibrous complex derived from the rubber-bonded cellulose fibers described above.

The resin contained in the second resin composition may be a thermosetting resin or a thermoplastic resin. Examples of the thermosetting resin include an epoxy resin, a urethane resin, and a phenolic resin. In view of the heat resistance of the rubber-bonded cellulose fibers, a resin that can be mixed at a temperature lower than 200°C is preferable. For example, a resin that is liquid at room temperature or has a softening point of 200°C or lower is preferable, and a bisphenol A-type epoxy resin, a bisphenol F-type epoxy resin, an alicyclic epoxy resin, or the like is more preferable. When the resin is a thermosetting resin, the second resin composition may further contain a curing agent.

Meanwhile, examples of the thermoplastic resin include polyolefin resins such as polyethylene resins and polypropylene resins; polyester resins; and polyamide resins. Among them, for example, polyethylene resins or polypropylene resins having a relatively low melting point are preferable.

In any of the case where the resin is a thermosetting resin and the case where the resin is a thermoplastic resin, the content of the resin is preferably 40 mass% or more and 99.5 mass% or less and more preferably 50 mass% or more and 99 mass% or less, relative to the total amount of the second resin composition (nonvolatile components of the second resin composition when the second resin composition contains a volatile component). When the amount of the resin is within the above range, the strength of the resin composition is easily increased and the resin composition is easily used in various applications.

Meanwhile, the fibrous complex contained in the second resin composition only needs to be derived from the above-described rubber-bonded cellulose fibers, and may be the above-described rubber-bonded cellulose fibers as is, or may be a fibrous complex in which a coating derived from the above-described rubber particles is formed around the cellulose fibers. In the preparation of the second resin composition, when melt-kneading or the like is performed in the vicinity of the softening point of the rubber, the rubber particles are softened and such a coating is easily formed.

The amount of the fibrous complex derived from the rubber-bonded cellulose fibers is preferably 0.5 mass% or more and 60 mass% or less and more preferably 1 mass% or more and 50 mass% or less, relative to the total amount of the second resin composition (nonvolatile components of the second resin composition when the second resin composition contains a volatile component). When the amount of the fibrous complex is 60 mass% or less, the amount of the resin is sufficient, and the properties, such as fluidity inherent in the resin, are easily achieved. Meanwhile, when the amount of the fibrous complex is 0.5 mass% or more, the elastic modulus of the resin composition is likely to be further increased, and the resin composition is unlikely to be broken as compared with a material having the same elastic modulus.

The second resin composition may contain an additional component besides the resin and the rubber-bonded cellulose fibers as long as the objects and effects of the present invention are not impaired. Examples of the additional component include a solvent, a curing agent, and various additives.

The preparation method for the second resin composition is appropriately selected depending on the type of the resin. For example, in a case where the resin is in a liquid state at normal temperature, the resin, the above-described rubber-bonded cellulose fibers, and, optionally, an additional component may be mixed at a relatively low temperature for preparation. Meanwhile, when the resin is a solid at normal temperature, the resin, the rubber-bonded cellulose fibers, and, optionally, an additional component may be mixed, and they may be mixed by melt-kneading or the like.

The second resin composition contains cellulose fibers in addition to the resins, and thus has high strength. In addition, the resin composition further contains rubber particles, and thus has high toughness. Therefore, the second resin composition can be used in applications to which composite materials containing a resin and a reinforcing material have been applied, for example, various applications such as electric appliances, building materials, vehicles such as automobiles and trains, and aircrafts.

### EXAMPLES

Hereinafter, the present invention will be further described with reference to Examples and Comparative Examples. The technical scope of the present invention is not limited by these Examples.

### 1. Provision of Material

The following materials were provided.

### Epoxy Compound

- Alicyclic epoxy compound (compound represented by the formula below, Celloxide 2021P, available from Daicel Corporation) 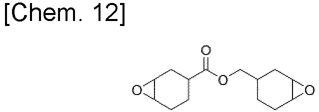
- Bisphenol A-type epoxy compound (EPCLON850S, available from DIC Corporation)

### Cellulose Fibers

- Cellulose fiber A (KC FLOCK W-50GK, available from Nippon Paper Industries Co., Ltd., average particle size (catalog value): 45 µm, viscosity measured by the following method: 72.1 Pa·s)
- Cellulose fiber B (ARBOCEL BE600-10TG, available from Rettenmaier Japan Co., Ltd., average fiber length (catalog value): 18 µm, viscosity measured by the following method: 6.9 Pa·s)
- Cellulose fiber C (ARBOCEL UFC100, available from Rettenmaier Japan Co., Ltd., average fiber length (catalog value): from 6 to 12 µm, viscosity measured by the following method: 7.9 Pa·s)
- Cellulose fiber D (KC FLOCK W-400GK, available from Rettenmaier Japan Co., Ltd., average particle size (catalog value): 24 µm, viscosity measured by the following method: 14.1 Pa·s)

### Method for Measuring Viscosity of Cellulose Fibers

Cellulose fibers were added to a highly transparent rubber-modified epoxy resin, RKB-5810 (available from Resinous Corporation), and concentration adjustment was performed with an alicyclic epoxy resin, Celloxide 2021P (available from Daicel Corporation) to give a rubber particle concentration of 8 mass% and a cellulose fiber concentration of 8 mass%. The viscosity (value at 25°C, 5 rpm, 30 seconds) of the dispersion was measured with a cone-plate viscometer (TVE-35H, cone rotor: 3° × R 9.7, available from Toki Sangyo Co., Ltd.).

### Rubber Particles

- Bifunctional alicyclic epoxy resin containing 10 mass% of rubber particles (RKB-5810, available from Resinous Corporation, average particle size of rubber particles: several tens of nm, core-shell type rubber particles, carboxy groups present on the surfaces)
- Bifunctional alicyclic epoxy resin containing 20 mass% of rubber particles (RKB-5820, available from Resinous Corporation, average particle size of rubber particles: several tens of nm, core-shell type rubber particles, carboxy groups present on the surfaces)
- Rubber particles (Staphyloid AC3832SD, available from Aica Kogyo Co., Ltd., average particle size: 500 nm, core-shell type rubber particles, carboxy groups present on the surfaces)
- Propylene glycol monomethyl ether containing 4.3 mass% of rubber particles (RKB-8818, available from Resinous Corporation, average particle size of rubber particles: several tens of nm, core-shell type rubber particles, carboxy groups present on the surfaces)

### Silane Coupling Agent

- Aminosilane coupling agent (aminopropyltriethoxysilane, DOWSIL Z-6011, available from Dow Inc.)
- Epoxysilane coupling agent (glycidoxypropyltrimethoxysilane, XIAMETER OFS-6040, available from Dow Inc.)

### Curing agent

- Acid anhydride (4-methylhexahydrophthalic anhydride/hexahydrophthalic anhydride, Rikacid MH-700, available from New Japan Chemical Co., Ltd.)
- Bifunctional aromatic thiol (4,4'-thiobisbenzenethiol)
- Catalyst (2-ethyl-4-methylimidazole, available from Shikoku Chemicals Corporation)

### 2. Preparation of First Resin Composition and Cured Resin Composition

### Example 1

97.6 g of the bifunctional alicyclic epoxy resin containing 10 mass% of rubber particles (RKB-5810), 12.2 g of the alicyclic epoxy compound (Celloxide 2021P), and 3.4 g of the aminosilane coupling agent (Z-6011) were mixed and stirred in a stirring mode at 2000 rpm for 30 seconds using Awatori Rentaro (atmospheric type, ARE-310), and the silane coupling agent was dispersed in the resin.

Thereafter, 9.8 g (absolute dry mass) of the cellulose fiber A (KC FLOCK W-50GK) was added, and dispersed with a ceramic roll until the fineness gauge reached less than 50 µm (2 passes (about 10 minutes)). The composition was heated at 60°C for 1 hour and then mixed using Awatori Rentaro (vacuum type, ARV-310P) at 2000 rpm and 0.8 kPa for 300 seconds and defoamed to prepare a first resin composition.

Separately, 1.0 g of the heated and dissolved catalyst (2E4MZ) and 120.0 g of the acid anhydride (MH700) were mixed. Then, the mixture was mixed with the first resin composition, and the mixture was mixed at 2000 rpm and 0.8 kPa for 100 seconds using Awatori Rentaro (vacuum type, ARV-310P) and defoamed, to prepare a curing agent-containing resin composition.

### Examples 2 to 11

A first resin composition and a curing agent-containing resin composition were prepared in the same manner as in Example 1 except that the formulation was changed as shown in Table 1 below.

### Example 12

A first resin composition was prepared by the same method as in Example 1. Thereafter, 4,4'-thiobisbenzenethiol was further added to the first resin composition, and the mixture was mixed in the same manner as in Example 1 to prepare a curing agent-containing resin composition.

### Comparative Examples 1 to 12

A resin composition and a curing agent-containing resin composition were prepared in the same manner as in Example 1 except that the formulation was changed as shown in Table 2.

### Referential Examples 1 and 3

The alicyclic epoxy compound or the bisphenol epoxy compound was used alone.

### Referential Examples 2 and 4

As shown in Table 3, the alicyclic epoxy compound or the bisphenol epoxy compound was mixed with the aminosilane coupling agent.

### Referential Examples 5 to 7

A resin composition and a curing agent-containing resin composition were prepared in the same manner as in Example 1 except that the formulation was changed as shown in Table 3 below.

### Evaluation

### •Evaluation of Bending Test

Each of the curing agent-containing resin compositions prepared in the above Examples and Comparative Examples was poured into a casting plate including a 3 mm thick rubber spacer sandwiched between glass plates, heated at 90°C for 3 hours, then subjected to temperature increase to 120°C over 6 minutes, and thermally cured at 120°C for 4 hours. The resultant cured product was cut into a size of 10 mm in width and 80 mm in length, and this was used as a test piece. The bending modulus of elasticity of the test piece was measured in accordance with JIS K6911 using a precision universal tester (AUTOGRAPH AG-X plus, available from Shimadzu Corporation). A higher measured value indicates a higher bending modulus of elasticity. The results are shown in Tables 1 and 2.

### •Evaluation of Viscosity

The viscosities X (value at 25°C, 5 rpm, 30 seconds) of the first resin compositions (or resin compositions) (exclusive of the curing agents and catalysts) of the above-described Examples and Comparative Examples were removed were measured with a cone-plate viscometer (TVE-35H, cone rotor: 3° × R 9.7, available from Toki Sangyo Co., Ltd.). Compositions were prepared in the same manner as in Examples and Comparative Examples except that no silane coupling agent was added, and the viscosities Y of the compositions without the silane coupling agent were measured in the same manner as described above. Then, viscosity X - viscosity Y was determined. The results are shown in Tables 1 and 2. In Referential Examples 1 to 4, the viscosity immediately after mixing and the viscosity after standing still at 60°C for 1 hour were measured. The results are shown in Table 3. These viscosities were measured in the same manner as described above except that the rotational speed was set to 50 rpm.

### •Measurement of Fracture Toughness

Each of the curing agent-containing resin compositions prepared in the above Examples and Comparative Examples was poured into a casting plate including a 6 mm thick rubber spacer sandwiched between glass plates, heated at 90°C for 3 hours, then subjected to temperature increase to 120°C over 6 minutes, and thermally cured at 120°C for 4 hours. The resultant cured product was cut into a size of 12.5 mm in width and 80 mm in length to form a test piece. The test piece was further processed in accordance with ASTM D5045, and the fracture toughness (unit: MPa·m^{0.5}) was measured. A precrack was made in the test piece by applying a razor blade to a notch of the test piece and impacting the razor blade with a hammer. A higher value is preferable. For example, it is preferably 0.6 or more, and more preferably 1.0 or more. The results are shown in Tables 1 to 3.
Measuring instrument: Shimadzu Autograph (available from Shimadzu Corporation)
Model: AG-X plus
Test speed: 0.5 mm/min
Span distance: 50 mm

### •Thermoplasticity Test

Each of the curing agent-containing resin compositions prepared in Examples 1 and 12 was poured into a casting plate including a 1 mm thick rubber spacer sandwiched between glass plates. The curing agent-containing resin composition of Example 1 was heated at 90°C for 3 hours, then subjected to temperature increase to 120°C over 6 minutes, and thermally cured at 120°C for 4 hours. The curing agent-containing resin composition of Example 13 was thermally cured at 100°C for 1 hour.

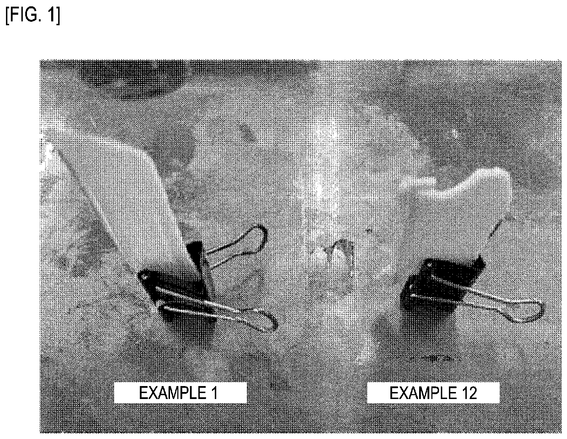

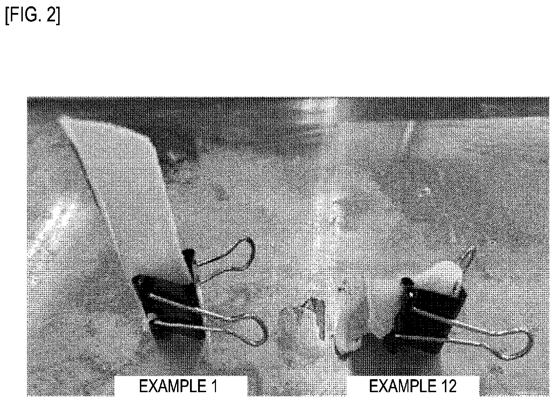

Each of the resultant cured products was charged into an oven heated to 200°C in a state of being erected with a clip, and the shape after the elapse of 1 minute was confirmed. When the shape before charging was not retained, it was determined that the resin composition was thermoplastic. FIG. 1 illustrates a state before charging into the oven, and FIG. 2 illustrates a state after charging into the oven. As illustrated in FIGS. 1 and 2, only the composition of Example 12 exhibited thermoplasticity.

### •Observation of Cured Resin Composition

FIG. 3 illustrates a photograph of the cured resin composition produced in Example 1 observed with a scanning electron microscope (SEM). As illustrated in FIG. 3, in the cured resin composition, the rubber particles were bonded to the peripheries of the cellulose fibers via the silane compound.

**[Table 1]**

| | | Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| Formulation parts by mass | Alicyclic epoxy compound (Celloxide 2021P) | 12.2 | 14.1 | 13.0 | 12.6 | 11.6 | 12.2 | 11.6 | 12.2 | 11.6 | 79.0 | 17.0 | 12.2 |
| | Bisphenol A-type epoxy compound (EPCLON850S) | | | | | | | | | | | | |
| | Cellulose fiber A (KC FLOCK W-50GK) | 9.8 | 4.8 | 9.7 | 9.7 | 9.8 | | | | | 9.3 | 10.4 | 9.8 |
| | Cellulose fiber B (BE600-10TG) | | | | | | 9.8 | 9.8 | | | | | |
| | Cellulose fiber C (UFC100) | | | | | | | | 9.8 | 9.8 | | | |
| | 10 wt.% Rubber particle-containing alicyclic epoxy resin | 97.6 | 95.5 | 96.7 | 97.1 | 98.2 | 97.6 | 98.2 | 97.6 | 98.2 | 23.3 | | 97.6 |
| | 20 wt.% Rubber particle-containing alicyclic epoxy resin | | | | | | | | | | | 103.7 | |
| | Rubber particles (AC3832SD) | | | | | | | | | | | | |
| | Aminosilane coupling agent | 3.4 | 3.3 | 1.5 | 2.4 | 4.9 | 3.4 | 4.9 | 3.4 | 4.9 | 0.8 | 7.2 | 3.4 |
| | Epoxysilane coupling agent | | | | | | | | | | | | |
| | Acid anhydride | 120.0 | 120.0 | 120.0 | 120.0 | 120.0 | 120.0 | 120.0 | 120.0 | 120.0 | 120.0 | 120.0 | |
| | Bifunctional aromatic thiol | | | | | | | | | | | | 96.0 |
| | Catalyst | 1.0 | 1.0 | 1.0 | 1.0 | 1.0 | 1.0 | 1.0 | 1.0 | 1.0 | 1.0 | 1.0 | |
| Proportion | Cellulose fiber content | 4.0% | 2.0% | 4.0% | 4.0% | 4.0% | 4.0% | 4.0% | 4.0% | 4.0% | 4.0% | 4.0% | 4.5% |
| | Carboxy group-containing rubber particle content | 4.0% | 4.0% | 4.0% | 4.0% | 4.0% | 4.0% | 4.0% | 4.0% | 4.0% | 1.0% | 8.0% | 4.5% |
| | Aminosilane coupling agent content | 1.4% | 1.4% | 0.6% | 1.0% | 2.0% | 1.4% | 2.0% | 1.4% | 2.0% | 0.3% | 2.8% | 1.6% |
| Ratio | Amount of aminosilane coupling agent/amount of carboxy group-containing rubber particles | 0.35 | 0.35 | 0.15 | 0.25 | 0.50 | 0.35 | 0.50 | 0.35 | 0.50 | 0.35 | 0.35 | 0.35 |
| Evaluation | Bending modulus of elasticity [N/mm²] | 3340 | 3230 | 3020 | 3000 | 3000 | 3040 | 3060 | 3020 | 3040 | 3010 | 2820 | - |
| | Fracture toughness [Mpa·M^{0.5}] | 1.101 | 0.969 | 0.924 | 1.008 | 0.948 | 0.788 | 0.820 | 0.853 | 0.840 | 0.909 | 0.984 | - |
| | Viscosity X of first resin composition 5 rpm [Pa·s] | 48.1 | 18.7 | 49.0 | 32.6 | 49.9 | 6.8 | 6.8 | 7.4 | 7.5 | 79.0 | 218.2 | 48.1 |
| | Viscosity Y without silane coupling agent 5 rpm [Pa·s] | 72.1 | 20.9 | 72.1 | 72.1 | 72.1 | 6.9 | 6.9 | 7.9 | 7.9 | 108.2 | 275.9 | 72.1 |
| | Viscosity X - viscosity Y | -24.0 | -2.2 | -23.1 | -39.5 | -22.2 | -0.1 | -0.1 | -0.5 | -0.4 | -29.2 | -57.7 | -24.0 |

**[Table 2]**

| | | Comparative Example | | | | | | | | | | | |
|---|---|---|---|---|---|---|---|---|---|---|---|---|---|
| | | 1 | 2 | 3 | 4 | 5 | 6 | 7 | 8 | 9 | 10 | 11 | 12 |
| | Alicyclic epoxy compound (Celloxide 2021P) | 13.5 | 15.4 | 100.0 | 100.0 | 77.7 | 100.0 | 100.0 | 19.6 | 13.5 | 13.5 | 12.2 | 100.0 |
| Formulation parts by mass | Bisphenol A-type epoxy compound (EPCLON850S) | | | | | | | | | | | | |
| | Cellulose fiber A (KC FLOCK W-50GK) | 9.6 | 4.7 | 9.6 | | 9.3 | 9.2 | 9.3 | 10.0 | | | 9.8 | 9.8 |
| | Cellulose fiber B (BE600-10TG) | | | | | | | | | 9.6 | | | |
| | Cellulose fiber C (UFC100) | | | | | | | | | | 9.6 | | |
| | 10 wt.% Rubber particle-containing alicyclic epoxy resin | 96.1 | 94.0 | | | 23.3 | | | | 96.1 | 96.1 | 97.6 | |
| | 20 wt.% Rubber particle-containing alicyclic epoxy resin | | | | | | | | 100.5 | | | | |
| | Rubber particles (AC3832SD) | | | 9.61 | | | | | | | | | 9.8 |
| | Aminosilane coupling agent | | | | | | | 3.3 | | | | | 3.4 |
| | Epoxysilane coupling agent | | | | | | | | | | | 3.4 | |
| | Acid anhydride | 120.0 | 120.0 | 120.0 | 120.0 | 120.0 | 120.0 | 120.0 | 120.0 | 120.0 | 120.0 | 120.0 | 120.0 |
| | Bifunctional aromatic thiol | | | | | | | | | | | | |
| | Catalyst | 1.0 | 1.0 | 1.0 | 1.0 | 1.0 | 1.0 | 1.0 | 1.0 | 1.0 | 1.0 | 1.0 | 1.0 |
| Proportion | Cellulose fiber content | 4.0% | 2.0% | 4.0% | 0.0% | 4.0% | 4.0% | 4.0% | 4.0% | 4.0% | 4.0% | 4.0% | 4.0% |
| | Carboxy group-containing rubber particle content | 4.0% | 4.0% | 4.0% | 0.0% | 1.0% | 0.0% | 0.0% | 8.0% | 4.0% | 4.0% | 4.0% | 4.0% |
| | Aminosilane coupling agent content | 0.0% | 0.0% | 0.0% | 0.0% | 0.0% | 0.0% | 1.4% | 0.0% | 0.0% | 0.0% | 0.0% | 1.4% |
| Ratio | Amount of aminosilane coupling agent/amount of carboxy group-containing rubber particles | 0.00 | 0.00 | 0.00 | 0.00 | 0.00 | 0.00 | - | 0.00 | 0.00 | 0.00 | 0.00 | 0.35 |
| Evaluation | Bending modulus of elasticity [N/mm²] | 3310 | 3230 | 3070 | 3120 | 3020 | 3030 | 3040 | 2940 | 3110 | 3110 | 3060 | 3040 |
| | Fracture toughness [Mpa·m^{0.5}] | 1.000 | 0.899 | 0.960 | 0.565 | 0.916 | 0.886 | 0.854 | 1.052 | 0.863 | 0.903 | 0.942 | 0.972 |
| | Viscosity X of resin composition 5 rpm [Pa·s] | 72.1 | 20.9 | 13.9 | 0.24 | 108.2 | 214.8 | 232.1 | 275.9 | 6.9 | 7.9 | 77.8 | 17.5 |
| | Viscosity Y without silane coupling agent 5 rpm [Pa·s] | - | - | - | - | - | - | 214.8 | - | - | - | 72.1 | 13.9 |
| | Viscosity X - viscosity Y | - | - | - | - | - | - | 17.3 | - | - | - | 5.7 | 3.6 |

**[Table 3]**

| | | Referential Example | | | | | | |
|---|---|---|---|---|---|---|---|---|
| | | 1 | 2 | 3 | 4 | 5 | 6 | 7 |
| Formulation parts by mass | Alicyclic epoxy compound (Celloxide 2021P) | 100.0 | 100.0 | | | 79.9 | 17.1 | 23.1 |
| | Bisphenol A-type epoxy compound (EPCLON850S) | | | 100.0 | 100.0 | | | |
| | Cellulose fiber A (KC FLOCK W-50GK) | | | | | | | |
| | Cellulose fiber B (BE600-10TG) | | | | | | | |
| | Cellulose fiber C (UFC100) | | | | | | | |
| | 10 wt.% Rubber particle-containing epoxy resin | | | | | 22.3 | 92.1 | |
| | 20 wt.% Rubber particle-containing epoxy resin | | | | | | | 96.1 |
| | Rubber particles (AC3832SD) | | | | | | | |
| | Aminosilane coupling agent | | 3.0 | | 3.0 | | | |
| | Epoxysilane coupling agent | | | | | | | |
| | Acid anhydride | | | | | 120.0 | 120.0 | 120.0 |
| | Bifunctional aromatic thiol | | | | | | | |
| | Catalyst | | | | | 1.0 | 1.0 | 1.0 |
| Proportion | Cellulose fiber content | 0.0% | 0.0% | 0.0% | 0.0% | 0.0% | 0.0% | 0.0% |
| | Carboxy group-containing rubber particle content | 0.0% | 0.0% | 0.0% | 0.0% | 1.0% | 4.0% | 8.0% |
| | Aminosilane coupling agent content | 0.0% | 2.9% | 0.0% | 2.9% | 0.0% | 0.0% | 0.0% |
| Ratio | Amount of aminosilane coupling agent/amount of carboxy group-containing rubber particles | - | - | - | - | - | - | - |
| Evaluation | Bending modulus of elasticity [N/mm²] | - | - | - | - | - | - | - |
| | Fracture toughness [Mpa·m^{0.5}] | - | - | - | - | 0.599 | 0.695 | 0.756 |
| | Viscosity of resin composition immediately after mixing 50 rpm [Pa·s] | 0.24 | 0.15 | 11.53 | 5.69 | - | - | - |
| | Viscosity of resin composition after 60°C/1 h 50 rpm [Pa·s] | 0.24 | 0.16 | 11.53 | 12.06 | - | - | - |

As shown in Table 1 above, all of the first resin compositions containing an alicyclic epoxy compound, cellulose fibers, carboxy group-containing rubber particles, and an aminosilane coupling agent were reduced in viscosity by addition of the aminosilane coupling agent (Examples 1 to 12).

In contrast, as shown in Table 2, the resin compositions of Comparative Examples 1 to 6 and 8 to 10, in which the silane coupling agent was not added, were high in viscosity as compared with the cases of Examples having the same cellulose fiber content or rubber particle content. In Comparative Example 11 in which the epoxysilane coupling agent was used instead of the aminosilane coupling agent, the addition of the silane coupling agent conversely resulted in an increase in viscosity. Furthermore, even though the aminosilane coupling agent was used, the viscosity of the resin composition was very high, and was further increased by the addition of the aminosilane coupling agent in Comparative Example 7, in which the carboxy group-containing rubber particles having a predetermined average particle size were not contained. Also in Comparative Example 12 using the rubber particles having a large average particle size, the viscosity was increased by the addition of the aminosilane coupling agent.

As shown by comparison between Referential Examples 1 and 2, the viscosity hardly changed even though the aminosilane coupling agent was added to the alicyclic epoxy resin and the reaction was accelerated by warming. Meanwhile, in Referential Example 4, the addition of the aminosilane coupling agent to the bisphenol A type epoxy resin resulted in increased viscosity. In Referential Examples 5 to 7 in which the blending amount of only the rubber particles was increased, the fracture toughness was improved, but the results were lower than those of Examples 1 to 11 in which the rubber particles, the cellulose fibers, and the aminosilane coupling agent were used in combination.

In addition, since the viscosity in Comparative Example 1 using the cellulose fiber A is higher than that in Comparative Examples 9 and 10 using the cellulose fibers B and C, respectively, the aspect ratio is high. In Examples 1 and 4 in which the cellulose fiber A is used and the aminosilane coupling material/carboxy group-containing rubber particle amount is from 0.25 to 0.35, the fracture toughness is 1 or more while the viscosity is reduced to 2/3 or less, and thus both toughness and a reduction in viscosity are achieved.

### 3. Preparation of rubber-bonded cellulose fibers and second resin composition

### Example a

A first resin composition was prepared in the same manner as in Example 1. To the first resin composition, Dowanol (registered trademark of The Dow Chemical Co.) PM (propylene glycol methyl ether) as a solvent was added in an amount of 3 times the amount of the first resin composition, followed by stirring. Thereafter, decantation was carried out and repeated 10 times until white turbidity disappeared. The resultant residual liquid was naturally filtered through a filter paper 3C, and the filter cake was dried at 105°C for 8 hours to produce rubber-bonded cellulose fibers a.

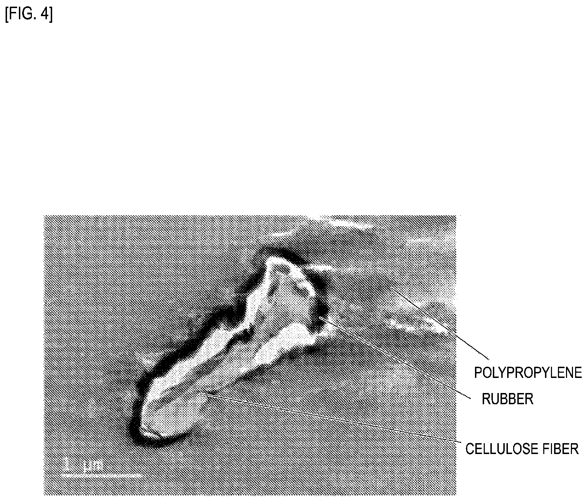

The rubber-bonded cellulose fibers a and polypropylene (Japan Polypropylene Corporation, MA3) were hand-blended so that the content of the rubber-bonded cellulose fibers a reached 5 mass%. Thereafter, the mixture was charged into a material feeding portion of a twin-screw extruder having a cylinder temperature of 180°C, and melt-kneaded under the following conditions: an extrusion amount of 500 g/hour and a screw rotation speed of 15 rpm to produce pellets of a second resin composition. FIG. 4 illustrates a photograph of the pellets as observed with a scanning electron microscope.

### Example b

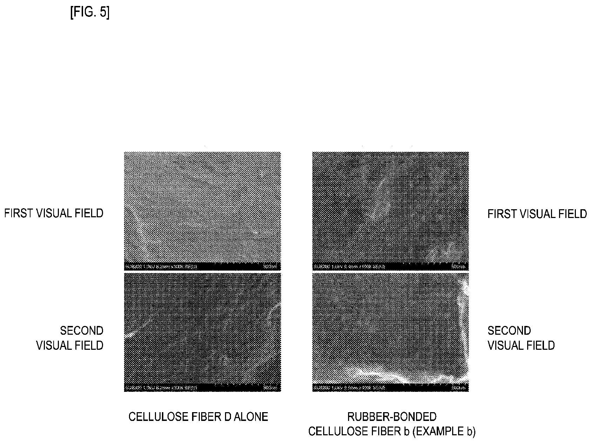

To 140 g of the propylene glycol monomethyl ether containing 4.3 mass% of rubber particles (RKB-8818), 2 g of the aminosilane coupling agent (Z-6011) (0.33 times the amount of the rubber particles) was added. The mixture was stirred at room temperature using Homodisper 2.5 type, and the aminosilane coupling agent was dispersed. 6 g of the cellulose fiber D was added to the dispersion, and the mixture was heated and stirred at 60°C for 120 minutes using the Homodisper 2.5 type. Thereafter, the mixture was filtered through a PTFE filter paper PF060, and the filter cake was dried at 100°C for 4 hours to produce rubber-bonded cellulose fibers. FIG. 5 illustrates a photograph of the cellulose fiber D alone and a photograph of the produced rubber-bonded cellulose fibers b. As illustrated in FIG. 5, in the produced rubber-bonded cellulose fibers b, the rubber particles are bonded to the peripheries of the cellulose fibers.

The rubber-bonded cellulose fibers b and polypropylene (Japan Polypropylene Corporation, MA3) were mixed so that the content of the rubber-bonded cellulose fibers b reached 5 mass%, and pellets of a second resin composition were produced in the same manner as in Example a.

### Comparative Example a

The cellulose fiber A and polypropylene (Japan Polypropylene Corporation, MA3) were mixed so that the content of the cellulose fiber A reached 5 mass%, and pellets of a resin composition were produced in the same manner as in Example a.

### Comparative Example b

Pellets of a resin composition were produced in the same manner as in Comparative Example a except that the cellulose fiber A was changed to the cellulose fiber D.

### Referential Example

Polypropylene (Japan Polypropylene Corporation, MA3) was charged into a material feeding portion of a twin-screw extruder having a cylinder temperature of 180°C, and melt-kneaded under the following conditions: an extrusion amount of 500 g/hour and a screw rotation speed of 15 rpm, and pellets of polypropylene were produced.

### Evaluation

### Melt Viscosity of Resin Composition

The melt viscosities when the resin compositions were prepared in Examples a and b and Comparative Examples a and b were measured using Capirograph 1-C available from Toyo Seiki Co., Ltd., using about 20 g of the resin compositions. In this case, a flat die having a diameter of 1 mm and a length of 10 mm was used as the capillary, and the temperature was set to 190°C. The polymer sample was introduced into the instrument, and held for 5 minutes, and then the melt viscosity at a shear rate of 1200 sec⁻¹ was measured (unit: Pa·s). The results are shown in Tables 4 and 5.

### Physical Properties of Resin Composition

### •Tensile Test (type A12)

Tensile test dumbbell pieces (total length: 75 mm, width: from 5 to 10 mm, and thickness: 2 mm) of JIS K7139 type A12 were prepared from the pellets of the second resin composition (or the resin composition or polypropylene) prepared in Examples a and b, Comparative Example a, and Referential Example using an injection molding apparatus at an injection molding temperature of 190°C. Then, for each of the dumbbell pieces, the elastic modulus (slope of the stress/strain curve corresponding to the two strain points of ε1 = 0.05% and ε2 = 0.25%), breaking point, strain at breaking point, maximum point stress, maximum point strain, upper yield point stress, and strain at upper yield point of the test piece were measured at a test speed 10 mm/min, using a precision universal tester ("AUTOGRAPHAG-Xplus" available from Shimadzu Corporation). The results are shown in Table 4.

**[Table 4]**

| | Melt viscosity [Pa·s] | Type A12 | | | | | |
|---|---|---|---|---|---|---|---|
| | | Elastic modulus [MPa] | Upper yield point stress [MPa] | Strain at breaking point [%] | Breaking point [MPa] | Maximum point stress [MPa] | Maximum point strain [%] |
| Referential Example | - | 846 | 27.8 | 818.7 | 30.8 | 31.5 | 812.4 |
| Comparative Example a | 155.8 | 1016 | 29.3 | 198.0 | 13.4 | 29.4 | 8.5 |
| Example a | 130.1 | 1068 | 30.8 | 536.9 | 18.9 | 30.8 | 8.3 |
| Example b | 133.3 | 1106 | 33.0 | 609.1 | 26.1 | 33.0 | 8.2 |

### •Tensile Test (type 1A), Charpy Impact Test

Tensile test dumbbell pieces (total length: 150 mm, width: from 10 to 20 mm, and thickness: 4 mm) of JIS K7139 type A1 were prepared from the pellets of the second resin composition (or the resin composition or polypropylene) prepared in Example b, Comparative Example b, and Referential Example using an injection molding apparatus at an injection molding temperature of 190°C. Then, for each of the dumbbell pieces, the elastic modulus (slope of the stress/strain curve corresponding to the two strain points of ε1 = 0.05% and ε2 = 0.25%) and upper yield point stress of the test piece were measured at a test speed 10 mm/min, using a precision universal tester ("AUTOGRAPHAG-Xplus" available from Shimadzu Corporation). Further, a test piece having predetermined dimensions (length: 80 mm, notch depth: 2 mm, thickness: 4.0 mm, notch R: 0.25 mm) was cut out from the molded article, and the notched test piece was subjected to a Charpy impact test at room temperature in accordance with SO179-1 to measure a Charpy impact value (impact strength). The results are shown in Table 5.

**[Table 5]**

| | Melt viscosity [Pa·s] | Type 1A | | |
|---|---|---|---|---|
| | | Elastic modulus [MPa] | Upper yield point stress [MPa] | Impact strength [kJ/m²] |
| Referential Example | - | 1040 | 30.6 | 3.2 |
| Example b | 133.3 | 1240 | 31.3 | 2.9 |
| Comparative Example b | 140.0 | 1180 | 31.4 | 2.2 |

As shown in Tables 4 and 5 above, in the Examples and Comparative Examples containing cellulose fibers (unprocessed) or rubber-bonded cellulose fibers, elastic modulus was higher and upper yield point stress was also higher as compared with the case where propylene was used alone (Referential Example).

The resin composition of Example a in which the rubber-bonded cellulose fibers were added to polypropylene was lower in melt viscosity than the resin composition of Comparative Example a in which the cellulose fiber A (unprocessed) was added to polypropylene. Furthermore, it was also clear that the resin composition of Example a was superior to that of Comparative Example a in elastic modulus, breaking point, maximum point stress, and the like. It is assumed that the rubber-bonded cellulose fibers were homogeneously dispersed in the resin composition. Also in Example b, elastic modulus was high, and breaking point was high.

Meanwhile, as shown in Table 5 above, when Comparative Example b in which the cellulose fiber D (unprocessed) was added to polypropylene was compared with Example b in which the rubber-bonded cellulose fibers were added thereto, melt viscosity was lower in Example b. It was also clear that Example b was superior to Comparative Example b in elastic modulus and impact strength. It is assumed that the rubber-bonded cellulose fibers are homogeneously dispersed in the resin composition and the rubber is bonded to the peripheries of the cellulose fibers.

### Example c

Rubber-bonded cellulose fibers a were prepared in the same manner as in Example a. Then, 10 parts by mass of the rubber-bonded cellulose fibers a were added to 100 parts by mass of the bisphenol A-type epoxy compound (EPCLON850S). Thereafter, the mixture was stirred and defoamed at 2000 rpm/0.8 kPa/100 seconds in Shinku Rentaro ARV-310P. The viscosity (25°C, 5 rpm, 30 seconds) of the resultant epoxy resin composition (second resin composition) was measured with a cone-plate viscometer (TVE-35H, cone rotor: 3° × R 9.7, available from Toki Sangyo Co., Ltd.) and found to be 47.2 Pa·s.

### Comparative Example c

An epoxy resin composition was prepared in the same manner as in Example c, except that the rubber-bonded cellulose fibers a were changed to the (unprocessed) cellulose fiber A. The viscosity of the epoxy resin composition was measured with a cone-plate viscometer (TVE-35H, cone rotor: 3° × R 9.7, available from Toki Sangyo Co., Ltd.) and found to be 132.6 Pa·s.

### Evaluation

When the viscosities in Example c and Comparative Example c were compared, the viscosity in Example c was half or less, and it was clear that the viscosity of the resin composition can be reduced by using the rubber-bonded cellulose fibers a.

The present application claims priority to Japanese patent application No. 2022-138436 filed on August 31, 2022. The contents described in the specification and drawings of the patent application are all incorporated herein by reference.

### INDUSTRIAL APPLICABILITY

The resin composition of the present invention contains an epoxy compound and cellulose fibers, but the viscosity can be reduced to a relatively low range. Therefore, the resin composition is easy to handle and can be used in various applications. In addition, the cured resin composition produced by curing the resin composition has high strength and high toughness. Therefore, it can be used in various applications such as electric appliances, building materials, vehicles including automobiles and trains, and aircrafts.

## Claims

1. Rubber-bonded cellulose fibers comprising:
cellulose fibers;
a plurality of rubber particles disposed on surfaces of the cellulose fibers and having an average particle size of 300 nm or less; and
a silane compound that bonds the cellulose fibers and the rubber particles.

2. The rubber-bonded cellulose fibers according to claim 1, wherein the average particle size of the rubber particles is 10 nm or more and 100 nm or less.

3. A resin composition comprising:
a resin; and
a fibrous complex derived from the rubber-bonded cellulose fibers described in claim 1 or 2.

4. The resin composition according to claim 3, wherein the resin is a thermoplastic resin.

5. The resin composition according to claim 3, wherein the resin is a polyethylene resin and/or a polypropylene resin.

6. A resin composition comprising:
an alicyclic epoxy compound;
cellulose fibers;
rubber particles having carboxy group-containing surfaces and having an average particle size of 300 nm or less; and
a silane compound containing an amino group.

7. The resin composition according to claim 6, wherein
a content of the cellulose fibers is 1 mass% or more and 10 mass% or less.

8. The resin composition according to claim 6 or 7, wherein
a content of the rubber particles is 2 mass% or more and 20 mass% or less.

9. The resin composition according to any one of claims 6 to 8, wherein
a content of the silane compound is equal to or greater than 0.1 times and equal to or less than 0.5 times the content of the rubber particles.

10. The resin composition according to any one of claims 6 to 9, wherein
the average particle size of the rubber particles is 10 nm or more and 100 nm or less.

11. The resin composition according to any one of claims 6 to 10, wherein
the alicyclic epoxy compound contains two alicyclic epoxy groups.

12. A cured resin composition produced by curing the alicyclic epoxy compound of the resin composition described in claim 11 with a bifunctional active hydrogen compound.

13. A method for manufacturing a resin composition, the method comprising:
mixing an alicyclic epoxy compound, rubber particles having carboxy group-containing surfaces and having an average particle size of 300 nm or less, and a silane compound containing an amino group; and
further mixing cellulose fibers.

14. A method for manufacturing rubber-bonded cellulose fibers, the method comprising:
preparing a liquid mixture by mixing a dispersion medium, rubber particles having carboxy group-containing surfaces and having an average particle size of 300 nm or less, a silane compound containing an amino group, and cellulose fibers; and
removing the dispersion medium from the liquid mixture.

15. The method for manufacturing rubber-bonded cellulose fibers according to claim 14, wherein
the dispersion medium is an alicyclic epoxy compound.

16. The method for manufacturing rubber-bonded cellulose fibers according to claim 15, wherein
in the removing the dispersion medium, the alicyclic epoxy compound is dissolved in a solvent.

17. The method for manufacturing rubber-bonded cellulose fibers according to claim 14, wherein
the dispersion medium is an alcohol having a relative dielectric constant of 8 or more and 18 or less at 25°C and/or an ester having a relative dielectric constant of 8 or more and 18 or less at 25°C.
